(19) Europäisches Patentamt
European Patent Office
Office européen des brevets

(11) **EP 2 657 076 B1**

(12) **EUROPEAN PATENT SPECIFICATION**

(45) Date of publication and mention
of the grant of the patent:
**14.10.2015 Bulletin 2015/42**

(51) Int Cl.:
***B60Q 1/10*** *(2006.01)*     ***B62J 6/02*** *(2006.01)*

(21) Application number: **12191423.8**

(22) Date of filing: **06.11.2012**

(54) **Headlight unit for vehicles that lean into turns, and method for illumination**

Scheinwerfereinheit für Fahrzeuge, die sich in Kurven legen, und deren Verfahren

Bloc optique pour véhicules qui penchent dans les virages et méthode associée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2012 JP 2012104064**

(43) Date of publication of application:
**30.10.2013 Bulletin 2013/44**

(73) Proprietor: **Yamaha Hatsudoki Kabushiki Kaisha
Iwata-shi, Shizuoka 438-8501 (JP)**

(72) Inventors:
• **Kino, Yasuhiko**
**Iwata-shi, Shizuoka 438-8501 (JP)**

• **Ooba, Junichi**
**Iwata-shi,**
**Shizuoka 438-8501 (JP)**
• **Kosugi, Makoto**
**Iwata-shi,**
**Shizuoka 438-8501 (JP)**

(74) Representative: **Grünecker Patent- und
Rechtsanwälte
PartG mbB
Leopoldstraße 4
80802 München (DE)**

(56) References cited:
**WO-A1-2010/061651     US-A1- 2005 270 785
US-A1- 2008 112 174     US-A1- 2008 225 535**

**Description**

The present invention relates to a headlight unit for a vehicle adapted to lean into turns according to the preamble of independent claim 1, a vehicle that lean into turns and a method for illumination of forward and outward area of a vehicle that leans into turns according to the preamble of independent claim 8. Such a headlight unit and such a method for illumination of forward and outward area of a vehicle that leans into turns can be taken from the prior art document US 2008/0225535 A1.

Prior art document US 2008/0112174 A1 discloses a headlight device, in which a change of the region of illumination afforded by the headlamp can be initiated substantially punctual to the start of cornering of the motorcycle, the headlight device includes a headlamp for illuminating forwardly of the motorcycle, a light-distribution adjusting mechanism for changing a region of illumination, a bank angle detecting unit for detecting a bank angle of the motorcycle in reference to an angular velocity about a vertical axis of the motorcycle, an angular velocity about a longitudinal axis of the motorcycle and a motorcycle velocity; and a light-distribution controller for controlling the light-distribution adjusting mechanism based on the detected bank angle to change the region of illumination into an area further away from and at least inwardly of a direction of turn of the motorcycle during a cornering.

Prior art document US 2005/0270785 A1 discloses a vehicle headlight unit comprising a sensor-controlled corrective device for the light beam pattern generated by the dipped low beam. At least one central headlight for driving in a straight line and one respective lateral headlight is positioned to the right and left thereof, with right-hand headlight for illuminating left-hand bends and the left-hand headlight for illuminating right-hand bends. Each headlight is rotated away from the horizontal position about its optical axis through an incline-compensation angle, so that the outer edge that lies at a distance from the central headlight is in a lower position than the latter. The corrective device comprises an electronic control unit, which activates at least the central headlight within a driving range for a substantially upright driving position and when bends are negotiated and a minimal tilting angle is exceeded, deactivates the central headlight and activates either the left-hand or right-hand headlight.

Typically, the operator of a vehicle that leans into turns (for example, straddle-type vehicles such as motorcycles, three-wheelers, snowmobiles, and ATVs (all-terrain vehicles)) uses weight shifts to counter the centrifugal force acting on the vehicle when steering into corners and intersections. As a result, the vehicle turns into a curve by tilting (leaning) inward. On the other hand, vehicles that do not lean into turns such as automobiles are steered into corners and intersections by the operator under the centrifugal force acting on the vehicle. The body of a vehicle that does not lean into turns thus tilts outward on a curve under centrifugal force.

Vehicles that lean into turns involve a large tilt, because the operator actively uses weight shifts to make turns. On the other hand, vehicles that do not lean into turns tilt toward the outside of a curve under centrifugal force. The extent of the tilt depends on the traveling speed of the vehicle and the size (radius) of a curve; however, vehicles that do not lean into turns do not actually use the tilt to make turns. The outward tilting of a vehicle that does not lean into turns on a curve under centrifugal force should preferably be small.

In short, whereas vehicles that lean into turns tilt inward on a curve to a relatively greater extent when turning into corners and intersections, vehicles that do not lean into turns involve a relatively smaller tilt directed toward the outside of a curve.

Vehicles, whether leaning or not leaning into turns, are typically equipped with more than one light: those mainly used to provide visibility to the operator of the vehicle, and those that allow the vehicle to be seen by other road users. Headlights are mainly used to provide visibility to the operator of the vehicle, and are typically switchable between a high beam (driving headlight) and a low beam (passing headlight).

High beams emit light horizontally (upwardly), and provide distant visibility. High beams are typically used in nighttime when other vehicles are not present ahead, in order to prevent dazzling the operators of the vehicles around. On the other hand, low beams emit light downward, and are also used when other vehicles and road users are present ahead. Vehicles thus typically use low beams for traveling.

The illumination range of the headlight light source (low beam) of a vehicle that leans into turns traveling along a straight road is below the horizontal plane including the headlight light source, and spreads forward with a laterally uniform distribution. When entering a left curve, however, the vehicle tilts leftward, and accordingly the illumination range of the headlight light source moves downward to the left. The light thus illuminates a point on the lane more toward the vehicle, and the illumination range becomes smaller inside the curve ahead in the direction of travel.

As a countermeasure, Japanese Patent No. 4806550 proposes a vehicle that includes sub headlights, positioned in pairs on the both sides of the vehicle, that turn on according to the lean angle (the tilt angle of the vehicle into a curve with respect to the upright state), in addition to the main headlight that casts light ahead of the vehicle.

A vehicle turning into corners and intersections encounters a wide range and variety of conditions, and the situations are not the same. The present inventors investigated a wide range and variety of conditions that the vehicle described in the foregoing publication might encounter, and found that the target view of the operator may appear dark when the lean angle of the vehicle described in the foregoing patent increases.

It is an object of the present invention to provide a headlight unit for a vehicle that lean into turns, a vehicle that lean into turns and to a method for illumination of forward and outward area of a vehicle that leans into turns, that can suppress the target view of the operator from appearing dark in the process of increasing or decreasing the lean angle of the vehicle.

According to the present invention said object is solved by a headlight unit for a vehicle that lean into turns having the features of independent claim 1. Preferred embodiments are laid down in the dependent claims. Furthermore, said object is also solved by a vehicle that lean into turns according to claim 7. Furthermore, said object is also solved by a method for illumination of forward and outward area of a vehicle that leans into turns having the features of independent claim 8.

The present invention can suppress the operator's target view from appearing dark in the process of increasing or decreasing the lean angle of a vehicle. The discomfort brought to the operator by the intense reflected light off the road surface also can be suppressed.

Hereinafter, the present invention is illustrated and explained by means of preferred embodiments in conjunction with the accompanying drawings. In the drawings wherein:

FIG. 1 is a front view schematically illustrating a motorcycle according to First Embodiment of the present invention.
FIG. 2 is a block diagram representing a basic configuration according to a headlight unit of the motorcycle illustrated in FIG. 1.
FIG. 3 is a front view schematically representing the light axes and the cutoff lines of light sources of the headlight unit of the motorcycle in the upright state.
FIG. 4A is a chart representing the relationship between the lean angle of the motorcycle of First Embodiment of the present invention and the brightnesses of left and right low beam light sources; FIG. 4B is a chart representing the relationship between the lean angle of the motorcycle and the brightnesses of the sub headlight light sources.
FIG. 5A is a diagram schematically representing the screen light distributions of headlights for the lean angle of the motorcycle at reference value $K_1$; FIG. 5B is a diagram schematically representing the screen light distributions of headlights for the lean angle of the motorcycle at reference value $K_2$; and FIG. 5C is a diagram schematically representing the screen light distributions of headlights for the lean angle of the motorcycle at reference value $K_3$.
FIG. 6 shows iso-illuminance curves schematically representing the road surface light distributions of headlights for the lean angle of the motorcycle at reference value $K_1$.
FIG. 7 shows iso-illuminance curves schematically representing the road surface light distributions of headlights for the lean angle of the motorcycle at reference value $K_2$.
FIG. 8 shows iso-illuminance curves schematically representing the road surface light distributions of headlights for the lean angle of the motorcycle at reference value $K_3$.
FIG. 9A is a diagram schematically representing the screen light distributions of headlights when the lean angle of a motorcycle in which the headlights do not dim according to the lean angle is at reference value $K_1$; FIG. 9B is a diagram schematically representing the screen light distributions of headlights when the lean angle is at reference value $K_2$; and FIG. 9C is a diagram schematically representing the screen light distributions of headlights when the lean angle is at reference value $K_3$.
FIG. 10 shows iso-illuminance curves schematically representing the road surface light distributions of headlights when the lean angle of a motorcycle in which the headlights do not dim according to the lean angle is at reference value $K_1$.
FIG. 11 shows iso-illuminance curves schematically representing the road surface light distributions of headlights when the lean angle of a motorcycle in which the headlights do not dim according to the lean angle is at reference value $K_2$.
FIG. 12 shows iso-illuminance curves schematically representing the road surface light distributions of headlights when the lean angle of a motorcycle in which the headlights do not dim according to the lean angle is at reference value $K_3$.

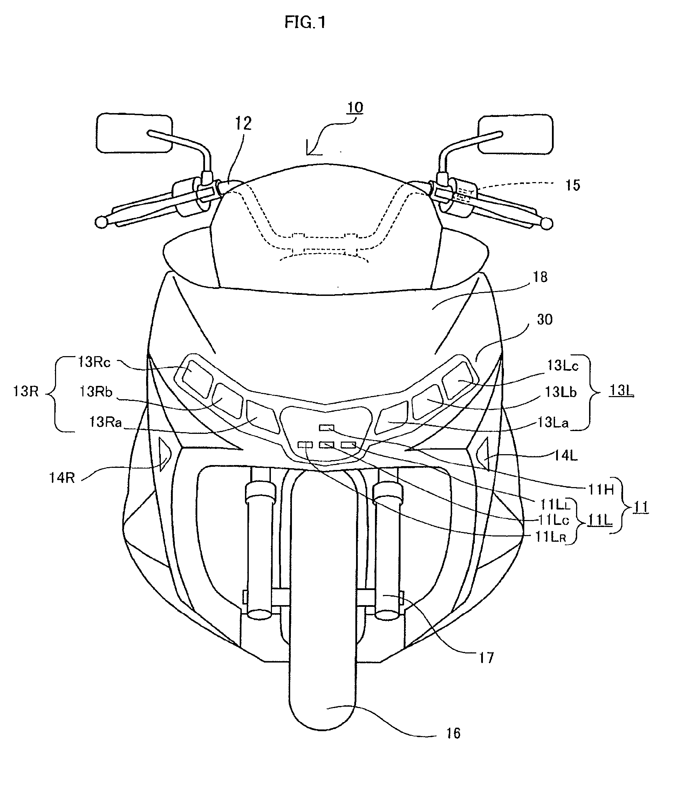

FIG. 1 is a front view schematically illustrating a motorcycle according to an embodiment of the present invention.

A motorcycle 10 represents an example of a vehicle that leans into turns of the present invention. In the present invention, the vehicle that leans into turns is not particularly limited, and examples include straddle-type vehicles such as motorcycles, three-wheelers, snowmobiles, and ATVs (all-terrain vehicles). In the descriptions below, the terms "longitudinal" and "vertical" are along the traveling direction and the vertical direction, respectively, of the vehicle, and the terms "left" and "right" are with respect to the operator.

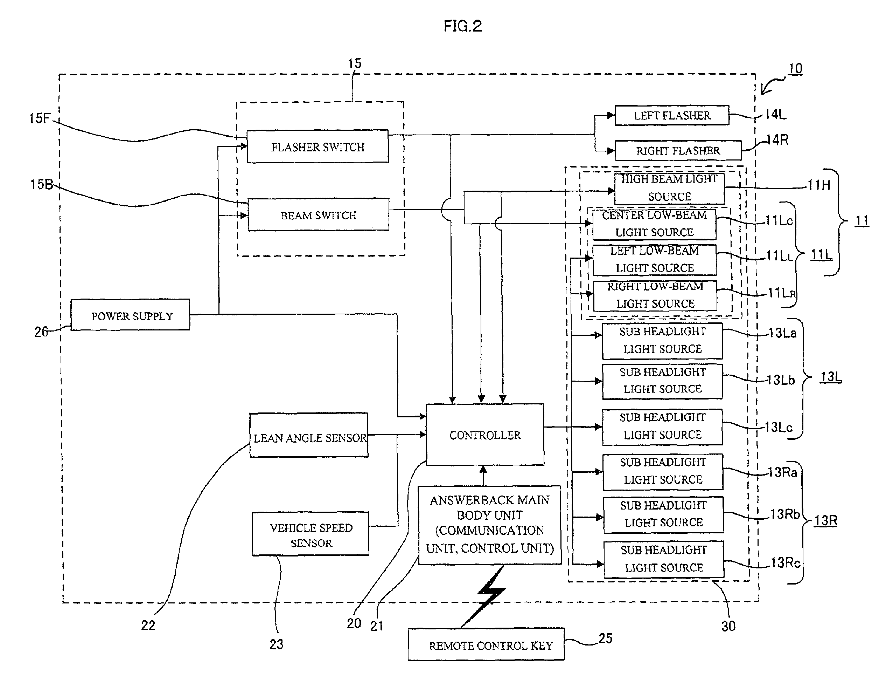

The motorcycle 10 has a handle bar 12. An operation switch 15 is disposed on the handle bar 12 on the left side of the width direction of the vehicle. The operation switch 15 includes a beam switch 15B and a flasher switch 15F (see FIG. 2). A steering shaft (not illustrated) is fixed to the handle bar 12 at the middle portion of the width direction of the vehicle. The steering shaft extends downwardly through a head pipe (not illustrated). Front forks 17 are disposed at the lower end side of the steering shaft. A front wheel 16 is rotatably supported on the lower end side of the front forks 17. The head pipe is a component of the vehicle frame. In the present invention, the vehicle frame is not particularly limited, and may be realized by a structure known in the art.

A front cover 18 is a covering provided in front of the head pipe through which the steering shaft is disposed. A headlight unit 30 is provided on the front side of the front cover 18 at the middle portion of the width direction of the vehicle. The headlight unit 30 includes a main headlight 11 and a sub headlight 13. The main headlight 11 includes a high beam light source 11 H (driving headlight) and a low beam light source 11L (passing headlight). The high beam light source 11H casts light forward horizontally ahead of the motorcycle 10, or upwardly from the horizontal direction. The low beam light source 11 L of the motorcycle 10 provides forward and downward light below the horizontal direction.

The low beam light source 11 L includes a center low beam light source $11L_C$, a left low beam light source $11L_L$, and a right low beam light source $11L_R$.

The center low beam light source $11L_C$ casts light forward ahead of the motorcycle 10. The brightness of the center low beam light source $11L_C$ does not vary with the lean angle of the motorcycle 10. The center low beam light source $11L_C$ corresponds to a first light source of the present invention.

The left low beam light source $11L_L$ casts light forward more leftward than the center low beam light source $11L_C$. The brightness of the left low beam light source $11L_L$ varies with the lean angle of the motorcycle 10. The left low beam light source $11L_L$ corresponds to a second light source of the present invention.

The right low beam light source $11L_R$ casts light forward more rightward than the center low beam light source $11L_C$. The brightness of the right low beam light source $11L_R$ varies with the lean angle of the motorcycle 10. The right low beam light source $11L_R$ corresponds to a second light source of the present invention.

Only one of the high beam light source 11 H and the low beam light source 11 L turns on according to the intended operation of the beam switch 15B (see FIG. 2) by the operator.

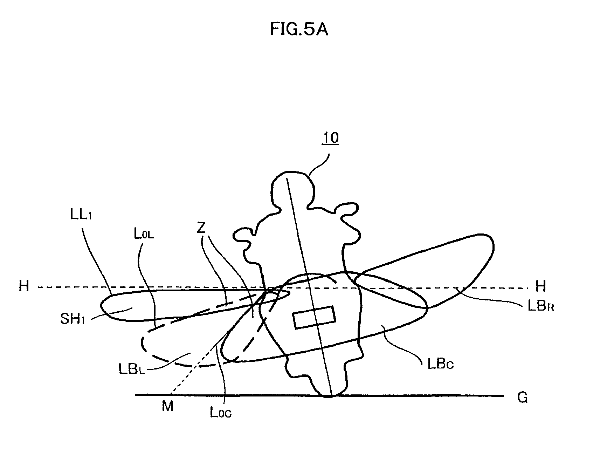

The sub headlight 13 includes a pair of sub headlight units 13L and 13R of variable light distribution. The sub headlight units 13L and 13R are disposed on each side of the width direction of the vehicle. The sub headlight unit 13L includes a plurality of sub headlight light sources 13La, 13Lb, and 13Lc. The sub headlight light sources 13La, 13Lb, and 13Lc are arranged in order from the middle portion toward the upper left side relative to the width direction of the vehicle. The sub headlight light sources 13La, 13Lb, and 13Lc have overlapping illumination ranges, arranged in order from the middle portion toward the upper left side relative to the width direction of the vehicle (FIGS. 5A to 5C). The sub headlight unit 13R includes a plurality of sub headlight light sources 13Ra, 13Rb, and 13Rc. The sub headlight light sources 13Ra, 13Rb, and 13Rc are arranged in order from the middle portion toward the upper right side relative to the width direction of the vehicle. As with the sub headlight light sources 13La, 13Lb, and 13Lc, the sub headlight light sources 13Ra, 13Rb, and 13Rc have overlapping illumination ranges, arranged in order from the middle portion toward the upper right side relative to the width direction of the vehicle. The sub headlight light sources 13La to 13Lc correspond to the second light source that casts light ahead outward and leftward of the width direction of the vehicle. The sub headlight light sources 13Ra to 13Rc correspond to the second light source that casts light ahead outward and rightward of the width direction of the vehicle. The light axes of the sub headlight light sources 13La to 13Lc, and 13Ra to 13Rc are fixed, and do not move with the lean angle. The reflectors (not illustrated) of the sub headlight light sources are also fixed, and do not move with the lean angle. In the present embodiment, the sub headlight light sources are not particularly limited, and, for example, LEDs may be used. Mono-focusing light sources also may be used as the sub headlight light sources. Further, the arrangement of the sub headlight light sources 13La to 13Lc, and 13Ra to 13Rc in the motorcycle 10 is merely an example of the present invention, and the present invention is not limited to this example.

Flashers 14L and 14R are disposed as direction indicators on each side of the width direction of the motorcycle 10. Only one of the flashers 14L and 14R turns on according to the intended operation of the flasher switch 15F (see FIG. 2) by the operator.

The sub headlight light sources 13La, 13Lb, and 13Lc positioned on the left side of the motorcycle 10 are disposed between the main headlight 11 and the flasher 14L in the width direction of the vehicle. The sub headlight light sources 13Ra, 13Rb, and 13Rc positioned on the right side of the motorcycle 10 are disposed between the main headlight 11 and the flasher 14R. In the present invention, the positional relationship between the sub headlight light sources and the flashers in the width direction of the vehicle is not particularly limited. For example, the sub headlight light sources may be disposed on the outer side of the flasher relative to the width direction of the vehicle.

Further, the sub headlight light sources 13La, 13Lb, and 13Lc are disposed above the main headlight 11 and the flasher 14L. Likewise, the sub headlight light sources 13Ra, 13Rb, and 13Rc are disposed above the main headlight 11 and the flasher 14R.

The sub headlight light sources 13La to 13Lc disposed on the left side of the width direction of the vehicle cast light forward and leftward of the motorcycle 10. The sub headlight light source 13Ra to 13Rc disposed on the right side of the width direction of the vehicle cast light forward and rightward of the motorcycle 10.

FIG. 2 is a block diagram representing a basic configuration of the sub headlight light sources of the motorcycle illustrated in FIG. 1.

The operation switch 15 includes the beam switch 15B and the flasher switch 15F. The flasher switch 15F is connected to the flashers 14L and 14R. One of the flashers 14L and 14R flashes according to the intended operation of the flasher switch 15F by the operator.

The beam switch 15B is connected to the high beam light source 11 H and the center low beam light source $11L_C$ of the main headlight 11.

The ON/OFF of the high beam light source 11H and the center low beam light source $11L_C$ are switched according to the intended operation of the beam switch 15B by the operator using the beam switch 15B.

The beam switch 15B is also connected to a controller 20. Specifically, the wire connecting the beam switch 15B and the high beam light source 11 H branches out and connects itself to the controller 20, whereas the wire connecting the beam switch 15B and the center low beam light source $11L_C$ branches out and connects itself to the controller 20. In this way, any operation to the beam switch 15B is sent to the controller 20. While the high beam light source 11H is on, the controller 20 keeps the left and right low beam light sources $11L_L$ and $11L_R$ off. While the center low beam light source $11L_C$ is on, the controller 20 turns on the left and right low beam light sources $11L_L$ and 11 $L_R$, and either dims or turns off the left and right low beam light sources 11 $L_L$ and $11L_R$ as the lean angle increases.

In the present embodiment, only one of the high beam light source 11 H and the low beam light source 11 L ($11L_C$, $11L_L$, $11L_R$) is turned on. However, the present invention is not limited to this example. For example, the ON/OFF of the high beam light source 11 H and the low beam light source 11 L ($11L_C$, $11L_L$, $11L_R$) may be switched to turn on both the high beam light source 11 H and the low beam light source 11 L ($11L_C$, 11 $L_L$, 11 $L_R$), or to turn on the low beam light source 11 L and turn off the high beam light source 11 H. In either case, the brightnesses of the left and right low beam light sources 11 $L_L$ and $11L_R$ vary according to the lean angle of the vehicle.

The motorcycle 10 is equipped with a lean angle sensor 22 and a vehicle speed sensor 23. In the present embodiment, the lean angle sensor 22 is a gyroscope that detects the angular velocity around the longitudinal axis of the motorcycle 10, and sends to the controller 20 a signal indicative of the detected angular velocity (roll rate) around the longitudinal axis. The vehicle speed sensor 23 detects the vehicle speed, and sends to the controller 20 a signal indicative of the detected vehicle speed. The controller 20 calculates the lean angle of the motorcycle 10 in motion at each predetermined time point by using the vehicle speed, and the angular velocity around the longitudinal axis.

In the present embodiment, the roll rate is time integrated, and the lean angle is calculated by using the vehicle speed as correction information. However, the lean angle calculation method is not limited to this example in the present invention. Further, the vehicle speed is not an essential variable in the lean angle calculation. The lean angle may be calculated by using methods known in the art. For example, the lean angle may be calculated by using a steady-state balance equation, using the yaw rate (angular velocity around the vertical axis) and the vehicle speed. Further, the correction information is not limited to vehicle speed. For example, a plurality of gyroscopes and G sensors may be provided, and the values obtained from these sensors, and the vehicle speed may be used as correction information. Further, instead of vehicle speed, GPS positional information and/or geomagnetic information may be used as correction information. The type of sensors (detection units) used for the detection of variables to find the lean angle are not particularly limited, and the sensors may be appropriately disposed according to the variables used for the calculations.

The controller 20 includes a memory (not illustrated).

The data stored in the memory include reference value K (°) used for comparison with the lean angle. In the present embodiment, the memory stores three reference values (first reference value $K_1$, second reference value $K_2$, and third reference value $K_3$). The first reference value $K_1$, the second reference value $K_2$, and the third reference value $K_3$ satisfy the relationship of first reference value $K_1$ < second reference value $K_2$ < third reference value $K_3$.

The data stored in the memory also include lower value T (°) used for comparison with the lean angle. The lower value corresponds to the lean angle at which the light sources in the off state start to glow as the lean angle increases.

In the present embodiment, the memory stores three lower values (first lower value $T_1$, second lower value $T_2$, and third lower value $T_3$). The first lower value $T_1$, the second lower value $T_2$, and the third lower value $T_3$ satisfy the relationship of first lower value $T_1$ < second lower value $T_2$ < third lower value $T_3$. Each lower value T is smaller than the reference value K. Specifically, the relationship of first lower value $T_1$ < first reference value $K_1$ is satisfied. The lower values set in the present embodiment do not represent the necessary elements of the present invention.

The stored data in the memory also include specific value I (°) used for comparison with the lean angle. The specific value corresponds to the lean angle at which the brightness of the second light source in the on state start to decrease as the lean angle increases.

In the present embodiment, the memory stores four specific values (first specific value $I_1$, second specific value $I_2$, lower specific value $I_D$, and upper specific value $I_U$). The first specific value $I_1$ and the second specific value $I_2$ satisfy the relationship first specific value $I_1$ < second specific value $I_2$. Each specific value I is greater than the reference value K. Specifically, the relationship of first reference value $K_1$ < first specific value $I_1$ is satisfied. The first specific value $I_1$ and the second specific value $I_2$ are greater than the lower specific value $I_D$ and the upper specific value $I_U$, respectively. Further, despite that the upper specific value $I_U$ is greater than the lower specific value $I_D$ in the present embodiment, the relationship between the upper specific value $I_U$ and the lower specific value $I_D$ is not particularly limited in the present invention, and the upper specific value $I_U$ and the lower specific value $I_D$ may have the same value.

The stored data in the memory also include prescribed value J (°) used for comparison with the lean angle. The prescribed value corresponds to the lean angle at which the second light source becomes the darkest as the lean angle increases past the specific value. When the lean angle is at or above the prescribed value, the second light source maintains the state (brightness) of when the lean angle is at the prescribed value.

In the present embodiment, the memory stores four prescribed values (first prescribed value $J_1$, second prescribed value $J_2$, lower prescribed value $J_D$, and upper prescribed value $J_U$). The first prescribed value $J_1$ and the second prescribed value $J_2$ satisfy the relationship first prescribed value $J_1$ < second prescribed value $J_2$. Each prescribed value J is greater than the specific value I. Specifically, the relationship of first specific value $I_1$ < first prescribed value $J_1$ is satisfied. The first prescribed value $J_1$ and the second prescribed value $J_2$ are greater than the lower prescribed value $J_D$ and the upper prescribed value $J_U$, respectively. Further, despite that the lower prescribed value $J_D$ is greater than the upper prescribed value $J_U$ in the present embodiment, the relationship between the upper prescribed value $J_U$ and the lower prescribed value $J_D$ is not particularly limited in the present invention, and the upper specific value $J_U$ and the lower prescribed value $J_D$ may have the same value.

The upper specific value and the upper prescribed value, and the lower specific value and the lower prescribed value are set for each of the left and right low beam light sources provided as the second light sources.

The lower specific value and the lower prescribed value are applied to the low beam light source that moves downward with increasing lean angles of the motorcycle. When the lean angle increases and reaches the lower specific value as the motorcycle tilts to one side (for example, left) of the width direction of the vehicle, the low beam light source $11L_L$ casting light on this side of the motorcycle becomes darker. In this way, the reflected light from the road surface can be reduced.

The upper specific value and the upper prescribed value are applied to the low beam light source that moves upward with increasing lean angles of the motorcycle. Specifically, when the lean angle increases and reaches the upper specific value as the motorcycle tilts to one side (for example, left) of the width direction of the vehicle, the low beam light source $11L_R$ casting light on the other side becomes darker. In this way, glare to the outside of a curve can be suppressed.

The sub headlight light sources 13La and 13Ra are assigned with the first reference value $K_1$, the first lower value $T_1$, the first specific value $I_1$, and the first prescribed value $J_1$.

The sub headlight light sources 13Lb and 13Rb are assigned with the second reference value $K_2$, the second lower value $T_2$, the second specific value $I_2$, and the second prescribed value $J_2$.

The sub headlight light sources 13Lc and 13Rc are assigned with the third reference value $K_3$ and the third lower value $T_3$. Note that the sub headlight light sources 13Lc and 13Rc, assigned with the largest reference value, are assigned with neither specific value nor prescribed value.

The left low beam light source $11L_L$ and the right low beam light source $11L_R$ are assigned with the upper specific value $I_U$, the lower specific value $I_D$, the upper prescribed value $J_U$, and the lower prescribed value $J_D$. In the present embodiment, the left low beam light source $11L_L$ and the right low beam light source $11L_R$ are not assigned with the reference values stored in the data of the memory; however, reference value 0° is set for the left low beam light source $11L_L$ and the right low beam light source $11L_R$. Thus, the left low beam light source $11L_L$ and the right low beam light source $11L_R$ turn on even when the motorcycle 10 is in the upright state. The left low beam light source $11L_L$ and the right low beam light source $11L_R$ are not assigned with the lower values.

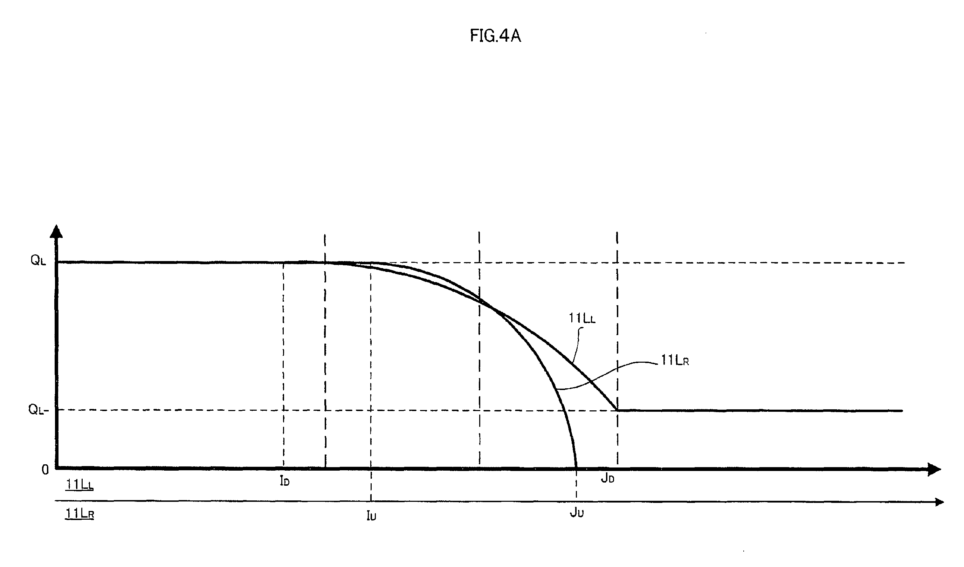

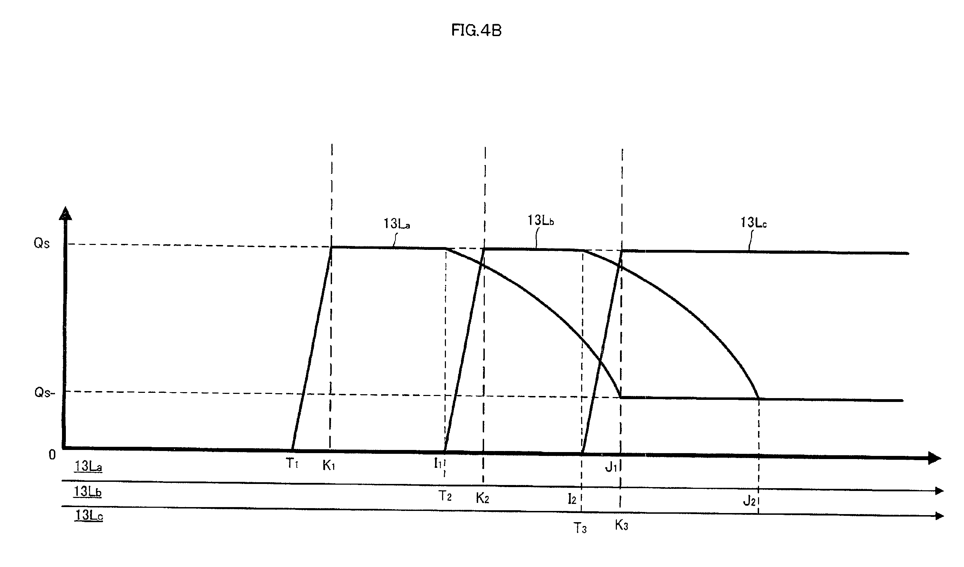

The relationship between each variable and the brightness of each light source of the headlight will be described later with reference to FIGS. 4A and 4B.

The controller 20 is connected to an answerback main body unit 21. The answerback main body unit 21 receives signal waves from a remote control key 25.

The controller 20 is also connected to the sub headlight light sources 13La to 13Lc and 13Ra to 13Rc, and the left low beam light source $11L_L$ and the right low beam light source $11L_R$ included in the headlight unit 30. A power supply 26 is connected to the high beam light source 11 H and the center low beam light source $11L_C$ via the beam switch 15B. The power supply 26 is connected to the flashers 14L and 14R via the flasher switch 15F. The power supply 26 is also connected to the controller 20.

The controller 20 controls the brightnesses of the sub headlight light sources 13La to 13Lc and 13Ra to 13Rc, and the brightnesses of the left low beam light source $11L_L$ and the right low beam light source $11L_R$. Note that, in the present embodiment, the sub headlight light sources 13La to 13Lc and 13Ra to 13Rc, and the left low beam light source $11L_L$ and the right low beam light source $11L_R$ are LEDs, and accordingly the controller 20 controls (modulates) the brightness by adjusting the duty ratio by pulse width modulation (PWM).

The method used to modulate the sub headlight light sources is not particularly limited, and, for example, the current or voltage sent to the sub headlight light sources may be controlled.

Further, a single sub headlight light source may be realized by a plurality of light sources of different brightnesses. In this case, these light sources may be switchably turned on to modulate the sub headlight light source.

It is also possible to realize a single sub headlight light source by a plurality of light sources. In this case, the sub headlight light source may be modulated by turning on the light sources in different numbers or in different combinations. The light sources may have the same or different brightnesses.

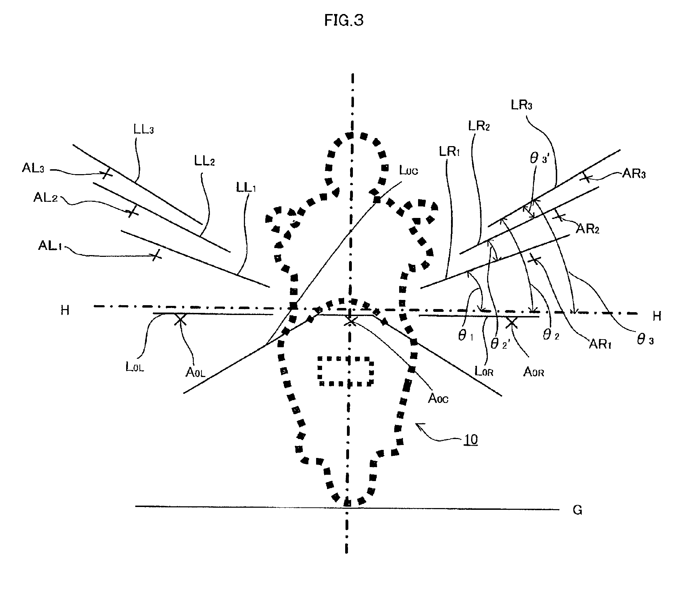

FIG. 3 is a front view schematically representing the light axes and the cutoff lines of the sub headlight light sources of the motorcycle in the upright state.

The motorcycle 10 is standing upright with respect to a flat ground G. The center low beam light source $11L_C$ has light axis $A_{0C}$ below the horizontal line H of the low beam light source 11L. The center low beam light source $11L_C$ has cutoff line $L_{0C}$ above the light axis $A_{0C}$ and below the horizontal line H of the low beam light source 11L. As represented in FIG. 3, the cutoff line $L_{0C}$ extends sideways at the middle portion of the width direction of the vehicle, and downwardly extends away from the outer sides of the width direction of the vehicle. Specifically, the left-hand portion and the right-hand portion of the cutoff line $L_{0C}$ extend downward of the left side and the right side, respectively, of the width direction of the vehicle.

The left low beam light source $11L_L$ has light axis $A_{0L}$ below the horizontal line H of the low beam light source 11 L. The left low beam light source 11 $L_L$ has cutoff line $L_{0L}$ above the light axis $A_{0L}$ and below the horizontal line H of the low beam light source 11L. The cutoff line $L_{0L}$ extends sideways along the width direction of the vehicle. The light axis $A_{0L}$ and the cutoff line $L_{0L}$ of the left low beam light source $11L_L$ are to the left of the light axis $A_{0C}$ and the cutoff line $L_{0C}$ of the center low beam light source $11L_C$. Accordingly, the illumination ranges of the left and right low beam light sources $11L_L$ and $11L_R$ are on the outer sides of the illumination range of the center low beam light source $11L_C$. The illumination ranges of the left and right low beam light sources $11L_L$ and $11L_R$ partially overlap the illumination range of the center low beam light source $11L_C$. Note that the right low beam light source $11L_R$ is identical to the left low beam light source $11L_L$, except that it is the mirror image of the left low beam light source $11L_L$ about the center of the width direction of the vehicle.

The central portion of the cutoff line $L_{0C}$ is at the same level as the cutoff lines $L_{0L}$ and $L_{0R}$ relative to the ground G. The light axis $A_{0C}$ has the same height as the light axes $A_{0L}$ and $A_{0R}$. The term "same" as used herein also means "substantially the same". The outer portions on the left and right of the cutoff line $L_{0C}$ partially overlap the cutoff lines $L_{0L}$ and $L_{0R}$ in the vertical direction.

The light axes $AL_1$ to $AL_3$ of the sub headlight light sources 13La to Lc are directed more outward of the width direction of the vehicle, in this order. The light axes $AL_1$ to $AL_3$ of the sub headlight light sources 13La to Lc are above the light axes $A_{0C}$, $A_{0L}$, and $A_{0R}$ of the low beam light source 11L.

The cutoff lines $LL_1$ to $LL_3$ of the sub headlight light sources 13La to Lc have increasing tilt angles $\theta_1$ to $\theta_3$, respectively.

The tilt angles $\theta_1$ to $\theta_3$ of the cutoff lines $LL_1$ to $LL_3$ of the sub headlight light sources 13La to Lc are spaced apart from each other relative to 0°, in this order. The interval between 0° and $\theta_1$ is $\theta_1$. The intervals $\theta_1$, $\theta_2$', and $\theta_3$' satisfy the relationship $\theta_1 > \theta_2' > \theta_3'$, where $\theta_2$ is the interval between $\theta_2$ and $\theta_1$, and $\theta_3$ is the interval between $\theta_3$ and $\theta_2$. Specifically, the intervals ($\theta_1$, $\theta_2$', $\theta_3$') become smaller with increasing tilt angles ($\theta_1$ to $\theta_3$). In the present invention, the relationship of the tilt angles ($\theta_1$ to $\theta_3$) is not limited to this example, and the intervals ($\theta_1$, $\theta_2$', $\theta_3$') may be regular intervals, specifically $\theta_1 = \theta_2' = \theta_3'$.

The relationship between the tilt angles ($\theta_1$ to $\theta_3$) of the cutoff lines ($LL_1$ to $LL_3$) of the sub headlight light sources (13La to Lc) and the reference values ($K_1$ to $K_3$) set for the sub headlight light sources (13La to Lc) are not particularly limited. These numerical values (angles) may be the same or different. When the values are the same, it also means that the values are substantially the same.

Though not shown in FIG. 3, the cutoff lines $LL_1$ to $LL_3$ of the sub headlight light sources 13La to Lc are at the upper edges of the illumination ranges of the sub headlight light sources 13La to Lc, and accordingly the illumination ranges of the sub headlight light source 13La to Lc are below the cutoff lines $LL_1$ to $LL_3$ of the sub headlight light sources 13La to Lc. Thus, the illumination ranges of the sub headlight light sources 13La to Lc include the space above the horizontal line H, and have different positions relative to the vertical direction of the motorcycle 10. Specifically, the illumination ranges of the sub headlight light sources 13La to Lc have increasingly upper positions in this order, and the illumination ranges partially overlap.

Note that the sub headlight light sources 13Ra to Rc will not be described, because these are the mirror images of the sub headlight light source 13La to Lc described above, and are otherwise identical to the sub headlight light sources 13La to Lc.

The following describes how the brightnesses of the main headlight 11 and the sub headlight 13 vary with increasing lean angles, with reference to FIGS. 4A and 4B.

FIG. 4A is a chart representing the relationship between the lean angle and the brightnesses of the left and right low beam light sources of the motorcycle according to First Embodiment of the present invention. FIG. 4B is a chart representing the relationship between the lean angle and the brightnesses of the sub headlight light sources of the motorcycle.

Lean angle = 0°

When the lean angle is 0°, the light sources of the main headlight 11 and the sub headlight 13 are in the following states.

The center low beam light source $11L_C$ is ON at brightness $Q_L$.

The left low beam light source $11L_L$ is ON at brightness $Q_L$.

The sub headlight light source 13La is OFF.

The sub headlight light source 13Lb is OFF.

The sub headlight light source 13Lc is OFF.

The right low beam light source $11L_R$ is ON at brightness $Q_L$.

0° < Lean angle (°) < first reference value $K_1$

The light sources of the main headlight 11 and the sub headlight 13 behave as follows as the lean angle increases from 0°.

The center low beam light source $11L_C$ is ON at brightness $Q_L$.

The left low beam light source $11L_L$ starts dimming from the brightness $Q_L$ upon the lean angle reaching the lower specific value $I_D$ set for the left low beam light source $11L_L$. Note that the brightness of the left low beam light source $11L_L$ continuously decreases as the lean angle increases within the range between the lower specific value $I_D$ and the lower prescribed value $J_D$.

The sub headlight light source 13La turns on upon the lean angle reaching the first lower value $T_1$ set for the sub headlight light source 13La. Note that the brightness of the sub headlight light source 13La continuously increases as the lean angle increases within the range between the first lower value $T_1$ and the first reference value $K_1$.

The sub headlight light source 13Lb is OFF.

The sub headlight light source 13Lc is OFF.

The right low beam light source $11L_R$ is ON at brightness $Q_L$.

Lean angle (°) = first reference value $K_1$

The light sources of the main headlight 11 and the sub headlight 13 are in the following states upon the lean angle reaching the reference value $K_1$ set for the sub headlight light source 13La.

The center low beam light source $11L_C$ is ON at brightness $Q_L$.

The left low beam light source $11L_L$ is ON at a brightness darker than brightness $Q_L$.

The sub headlight light source 13La is ON at brightness $Q_S$.

The sub headlight light source 13Lb is OFF.

The sub headlight light source 13Lc is OFF.

The right low beam light source $11L_R$ is ON at brightness $Q_L$.

Here, the lean angle of the motorcycle 10 has reached the lower specific value $I_D$ of the left low beam light source $11L_L$, and the center low beam light source $11L_C$ and the sub headlight light source 13La are ON. The left low beam light source $11L_L$ is ON at a brightness darker than brightness $Q_L$. The screen light distributions of the main headlight 11 and the sub headlight 13 will be described later with reference to FIG. 5A.

First reference value $K_1$ < lean angle (°) < second reference value $K_2$

The light sources of the main headlight 11 and the sub headlight 13 behave as follows as the lean angle increases from the first reference value $K_1$.

The center low beam light source $11L_C$ is ON at brightness $Q_L$.

The left low beam light source $11L_L$ gradually becomes darker with increasing lean angles.

The sub headlight light source 13La remains ON at the same brightness $Q_S$ while the lean angle remains in the range between the first reference value $K_1$ and the first specific value $I_1$. The sub headlight light source 13La starts dimming from the brightness $Q_S$ upon the lean angle reaching the first specific value $I_1$ set for the sub headlight light source 13La. Note that the brightness of the sub headlight light source 13La continuously decreases as the lean angle increases within the range between the first specific value $I_1$ and the first prescribed value $J_1$.

The sub headlight light source 13Lb turns on upon the lean angle reaching the second lower value $T_2$ set for the sub headlight light source 13Lb. Note that the brightness of the sub headlight light source 13Lb continuously increases as the lean angle increases within the range between the second lower value $T_2$ and the second reference value $K_2$.

The sub headlight light source 13Lc is OFF.

The right low beam light source $11L_R$ starts dimming from brightness $Q_S$ upon the lean angle reaching the upper specific value $I_U$ set for the right low beam light source $11L_R$. Note that the brightness of the right low beam light source $11L_R$ continuously decreases as the lean angle increases within the range between the upper specific value $I_U$ and the upper prescribed value $J_U$.

Lean angle (°) = second reference value $K_2$

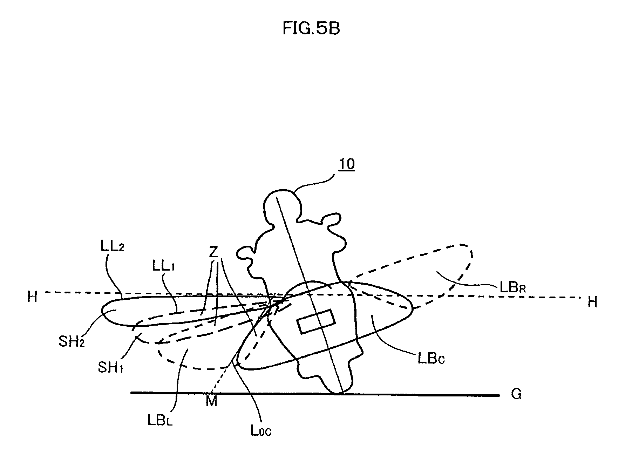

The light sources of the main headlight 11 and the sub headlight 13 are in the following states upon the lean angle reaching the reference value $K_2$ set for the sub headlight light source 13Lb.
The center low beam light source $11L_C$ is ON at brightness $Q_L$.
The left low beam light source $11L_L$ is ON at a brightness darker than brightness $Q_L$.
The sub headlight light source 13La is ON at a brightness darker than brightness $Q_S$.
The sub headlight light source 13Lb is ON at brightness $Q_S$.
The sub headlight light source 13Lc is OFF.
The right low beam light source $11L_R$ is ON at a brightness darker than brightness $Q_L$.
Here, the lean angle of the motorcycle 10 has reached the first specific value $I_1$ of the sub headlight light source 13La, and the center low beam light source $11L_C$ and the sub headlight light source 13Lb are ON. The sub headlight light source 13La is ON at a brightness darker than brightness $Q_S$. The screen light distributions of the main headlight 11 and the sub headlight 13 will be described later with reference to FIG. 5B.

Second reference value $K_2$ < lean angle (°) < third reference value $K_3$

The light sources of the main headlight 11 and the sub headlight 13 behave as follows as the lean angle increases from the second reference value $K_2$.
The center low beam light source $11L_C$ is ON at brightness $Q_L$.
The left low beam light source $11L_L$ gradually becomes darker with increasing lean angles, and turns on at brightness $Q_{L-}$ upon the lean angle reaching the lower prescribed value $J_D$. Brightness $Q_{L-}$ is darker than brightness $Q_L$.
The sub headlight light source 13La gradually becomes darker with increasing lean angles, and turns on at brightness $Q_{S-}$ upon the lean angle reaching the first prescribed value $J_1$. Brightness $Q_{S-}$ is darker than brightness $Q_S$.
The sub headlight light source 13Lb remains ON at the same brightness $Q_S$ while the lean angle remains within the range between the second reference value $K_2$ and the second specific value $I_2$. The sub headlight light source 13Lb starts dimming from brightness $Q_S$ upon the lean angle reaching the second specific value $I_2$ set for the sub headlight light source 13Lb. Note that the brightness of the sub headlight light source 13Lb continuously decreases as the lean angle increases within the range between the second specific value $I_2$ and the second prescribed value $J_2$.
The sub headlight light source 13Lc turns on upon the lean angle reaching the third lower value $T_3$ set for the sub headlight light source 13Lc. Note that the brightness of the sub headlight light source 13Lc continuously increases as the lean angle increases within the range between the third lower value $T_3$ and the third reference value $K_3$.
The right low beam light source $11L_R$ gradually becomes darker with increasing lean angles. The right low beam light source $11L_R$ turns off upon the lean angle reaching the upper prescribed value $J_U$ set for the right low beam light source $11L_R$.

Lean angle (°) = third reference value $K_3$

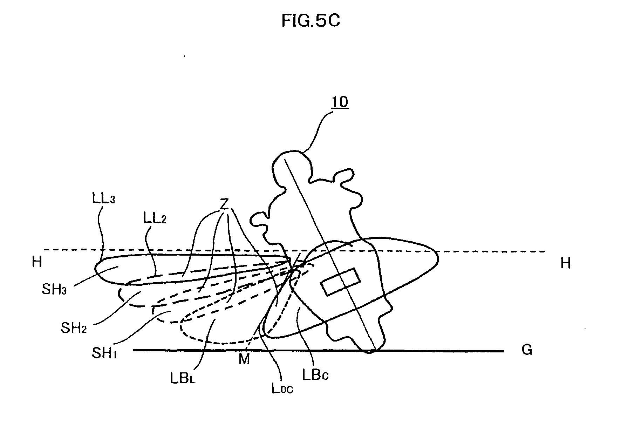

The light sources of the main headlight 11 and the sub headlight 13 are in the following states upon the lean angle reaching the reference value $K_3$ set for the sub headlight light source 13Lc.
The center low beam light source $11L_C$ is ON at brightness $Q_L$.
The left low beam light source $11L_L$ is ON at brightness $Q_{L-}$.
The sub headlight light source 13La is ON at brightness $Q_{S-}$.
The sub headlight light source 13Lb is ON at a brightness darker than brightness $Q_S$ and brighter than brightness $Q_{S-}$.
The sub headlight light source 13Lc is ON at brightness $Q_S$.
The right low beam light source $11L_R$ is OFF.
Here, the lean angle of the motorcycle 10 has reached the second specific value $I_2$ of the sub headlight light source 13Lb, and the center low beam light source $11L_C$ and the sub headlight light source 13Lc are ON. The sub headlight light source 13Lb is ON at a brightness darker than brightness $Q_S$. The screen light distributions of the main headlight 11 and the sub headlight 13 will be described later with reference to FIG. 5C.

Third reference value $K_3$ < lean angle (°)

The light sources of the main headlight 11 and the sub headlight 13 behave as follows as the lean angle increases from the reference value $K_3$.

The center low beam light source $11L_C$ is ON at brightness $Q_L$.

The left low beam light source $11L_L$ is ON at brightness $Q_{L^-}$.

The sub headlight light source 13La is ON at brightness $Q_{S^-}$.

The sub headlight light source 13Lb continuously becomes darker until the lean angle increases and reaches the second prescribed value $J_2$ set for the sub headlight light source Lb. The sub headlight light source 13Lb is ON at brightness $Q_{S^-}$ when the lean angle is at or above the second prescribed value $J_2$.

The sub headlight light source $13L_C$ is ON at brightness $Q_S$.

The right low beam light source $11L_R$ is OFF.

When the motorcycle 10 tilts to the left, the sub headlight light sources 13La to 13Lc vary their brightnesses in order as the lean angle increases, as described above, and the sub headlight light sources 13Ra to 13Rc are OFF all the time. Note that FIGS. 4A and 4B describing the tilting of the motorcycle 10 to the left is also applicable to the tilting of the motorcycle 10 to the right. Further, in FIGS. 4A and 4B, the duty ratio of the applied voltages to the light sources is used as an index of light source brightness. However, in the present invention, the index of light source brightness is not limited to this example. For example, an applied voltage, an applied current, an illuminance at a predetermined distance from the light source, or a light source luminance may be used as an index of light source brightness, and the relationships between the light source brightnesses ($Q_L > Q_{L^-}$, $Q_S > Q_{S^-}$) are established irrespective of the indexes used. The relationship between the brightnesses $Q_L$ and $Q_S$, and the relationship between the brightnesses $Q_{L^-}$ and $Q_{S^-}$ are not particularly limited. Further, $Q_L$, $Q_S$, $Q_{L^-}$, and $Q_{S^-}$ are not particularly limited to specific brightnesses, and may be appropriately set, as needed. Further, in the present embodiment, the brightnesses $Q_L$, $Q_S$, $Q_{L^-}$, and $Q_{S^-}$ are the same for the left low beam light source $11L_L$ and the sub headlight light sources 13La to 13Lc, and the right low beam light source $11L_R$ and the sub headlight light sources 13Ra to Rc. However, the present invention is not limited to this example, and the brightnesses $Q_L$, $Q_S$, $Q_{L^-}$, and $Q_{S^-}$ may be appropriately set, as needed.

The following describes how the screen light distributions of the headlights vary according to the lean angle of the motorcycle 10, with reference to FIGS. 5A to 5C. In FIGS. 5A to 5C, the motorcycle 10 tilts to the left, and the cutoff line $L_{0C}$ shown in the figures indicates the left-hand portion of the cutoff line $L_{0C}$ relative to the width direction of the vehicle.

FIG. 5A is a diagram schematically illustrating the screen light distributions of the headlights for the lean angle of the motorcycle at reference value $K_1$.

The illumination range $LB_C$ of the center low beam light source $11L_C$ is forward in front of the motorcycle 10. The illumination range $LB_C$ of the center low beam light source $11L_C$ tilts downwardly to the left as the motorcycle 10 tilts leftward.

To the left of the illumination range $LB_C$ of the center low beam light source $11L_C$ is the illumination range $LB_L$ of the left low beam light source $11L_L$. The illumination range $LB_L$ of the left low beam light source $11L_L$ also tilts downwardly to the left as the motorcycle 10 tilts leftward. The illumination range $LB_L$ of the left low beam light source $11L_L$ partially overlaps the illumination range $LB_C$ of the center low beam light source $11L_C$.

The left low beam light source $11L_L$ is dimming when the lean angle of the motorcycle 10 is at the first reference value $K_1$ (FIGS. 4A and 4B), and accordingly the overlapping portion Z of the illumination ranges $LB_L$ and $LB_C$ is not excessively bright.

The illumination range $SH_1$ of the sub headlight light source 13La is above the illumination range $LB_L$ of the left low beam light source $11L_L$. As a result of the leftward tilting of the motorcycle 10, the left portion of the illumination range $SH_1$ of the sub headlight light source 13La is lower than the range in the upright state of the motorcycle 10 (FIG. 3). The illumination range $SH_1$ of the sub headlight light source 13La is in the space below the horizontal line H, and partially overlaps the illumination range $LB_L$ of the left low beam light source $11L_L$. The left low beam light source $11L_L$ is dimming when the lean angle of the motorcycle 10 is at the first reference value $K_1$ (FIGS. 4A and 4B), and accordingly the overlapping portion Z of the illumination ranges $SH_1$ and $LB_L$ is not excessively bright.

Note that the cutoff line $LL_1$ of the sub headlight light source 13La is substantially horizontal. Thus, the angle created by the cutoff line $LL_1$ and the horizontal line H is smaller than the tilt angle $\theta_1$ (FIG. 3). The angle created by the cutoff line $L_{0L}$ of the left low beam light source $11L_L$ and the horizontal line H is larger than the angle created by the cutoff line $LL_1$ and the horizontal line H. Further, because the left low beam light source $11L_L$ are dimming and remains on, the continuity of the illumination ranges $LB_C$, $LB_L$, and $SH_1$ is maintained.

To the right of the illumination range $LB_C$ of the center low beam light source $11L_C$ is the illumination range $LB_R$ of the right low beam light source $11L_R$. The illumination range $LB_R$ of the right low beam light source $11L_R$ also tilts downwardly to the left as the motorcycle 10 tilts leftward. The illumination range $LB_R$ of the right low beam light source $11L_R$ partially overlaps the illumination range $LB_C$ of the center low beam light source $11L_C$.

FIG. 5B is a diagram schematically illustrating the screen light distributions of the headlights for the lean angle at the reference value $K_2$.

The illumination ranges $LB_C$, $LB_L$, $SH_1$, and $LB_R$ tilt more downwardly to the left as the motorcycle 10 further tilts leftward. The left low beam light source $11L_L$, the sub headlight light source 13La, and the right low beam light source $11L_R$ are dimming (FIGS. 4A and 4B), and accordingly the overlapping portion Z of the illumination ranges $LB_C$ and $LB_L$, and the overlapping portion Z of the illumination ranges $LB_L$ and $SH_1$ are not excessively bright.

The illumination range $SH_2$ of the sub headlight light source 13Lb is above the illumination range $SH_1$ of the sub headlight light source 13La. As a result of the leftward tilting of the motorcycle 10, the left portion of the illumination range $SH_2$ of the sub headlight light source 13Lb is lower than the range in the upright state of the motorcycle 10 (FIG. 3). The illumination range $SH_2$ of the sub headlight light source 13Lb is in the space below the horizontal line H, and partially overlaps the illumination range $SH_1$ of the sub headlight light source 13La. The sub headlight light source 13La is dimming (FIGS. 4A and 4B), and accordingly the overlapping portion Z of the illumination ranges $SH_1$ and $SH_2$ is not excessively bright.

Note that the cutoff line $LL_2$ of the sub headlight light source 13Lb is substantially horizontal. Thus, the angle created by the cutoff line $LL_2$ and the horizontal line H is smaller than the tilt angle $\theta_2$ (FIG. 3). Further, the angle created by the cutoff line $LL_1$ of the sub headlight light source 13La and the horizontal line H is larger than the angle created by the cutoff line $LL_2$ and the horizontal line H. Further, because the left low beam light source $11L_L$ and the sub headlight light source 13La are dimming and remain on, the continuity of the illumination ranges $LB_C$, $LB_L$, $SH_1$, and $SH_2$ is maintained.

FIG. 5C is a diagram schematically illustrating the screen light distributions of the headlights for the lean angle at the reference value $K_3$.

The illumination ranges $LB_C$, $LB_L$, $SH_1$, and $SH_2$ further tilt downwardly to the left as the motorcycle 10 further tilts leftward. The left low beam light source $11L_L$, the sub headlight light source 13La, and the sub headlight light source 13Lb are dimming, and the right low beam light source $11L_R$ is OFF (FIGS. 4A and 4B). Thus, the overlapping portion Z of the illumination ranges $LB_C$ and $LB_L$, the overlapping portion Z of the illumination ranges $LB_L$ and $SH_1$, and the overlapping portion Z of the illumination ranges $SH_1$ and $SH_2$ are not excessively bright.

The illumination range $SH_3$ of the sub headlight light source 13Lc is above the illumination range $SH_2$ of the sub headlight light source 13Lb. As a result of the leftward tilting of the motorcycle 10, the left portion of the illumination range $SH_3$ of the sub headlight light source 13Lc is lower than the range in the upright state of the motorcycle 10 (FIG. 3). The illumination range $SH_3$ of the sub headlight light source 13Lc is in the space below the horizontal line H, and partially overlaps the illumination range $SH_2$ of the sub headlight light source 13Lb. Because the sub headlight light source 13Lb is dimming (FIGS. 4A and 4B), the overlapping portion Z of the illumination ranges $SH_2$ and $SH_3$ is not excessively bright.

Note that the cutoff line $LL_3$ of the sub headlight light source 13Lc is substantially horizontal. Thus, the angle created by the cutoff line $LL_3$ and the horizontal line H is smaller than the tilt angle $\theta_3$ (FIG. 3). Further, the angle created by the cutoff line $LL_2$ of the sub headlight light source 13Lb and the horizontal line H is larger than the angle created by the cutoff line $LL_3$ and the horizontal line H. Further, because the left low beam light source $11L_L$ and the sub headlight light sources 13La and 13Lb are dimming and remain on, the continuity of the illumination ranges $LB_C$, $LB_L$, $SH_1$, $SH_2$, and $SH_3$ is maintained.

Further, as illustrated in FIGS. 5A to 5C, the angle created by the left-hand portion of the cutoff line $L_{0C}$ and the ground G gradually increases with increasing lean angles of the motorcycle 10 tilting to the left. Further, the left-hand portion of the cutoff line $L_{0C}$ gradually approaches the motorcycle 10. Specifically, the intersection M where the line (not shown) extending from the left-hand portion of the cutoff line $L_{0C}$ toward the ground G crosses the ground G gradually approaches the motorcycle 10.

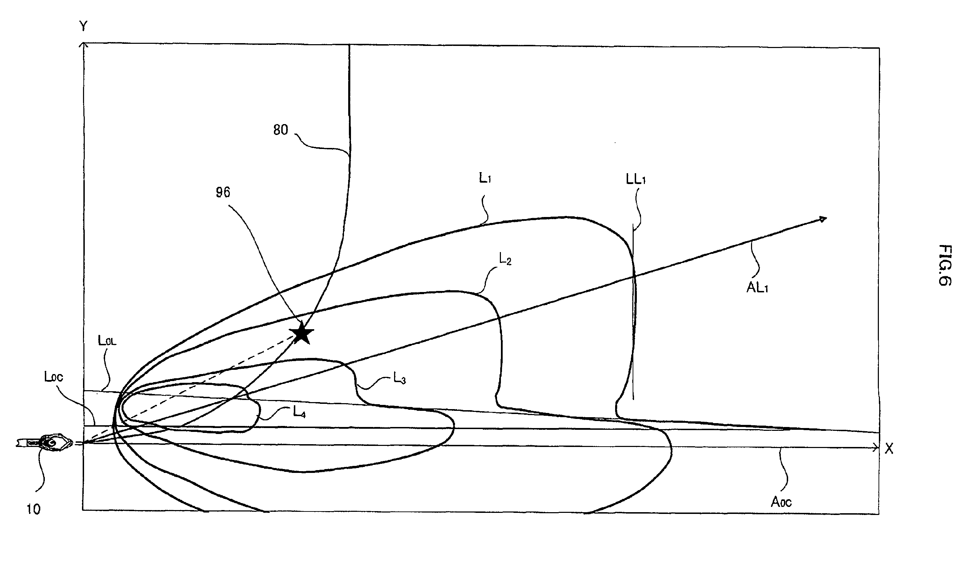

The following describes how the road surface light distribution of the headlights vary according to the lean angle of the motorcycle 10, with reference to FIG. 6 to FIG. 8.

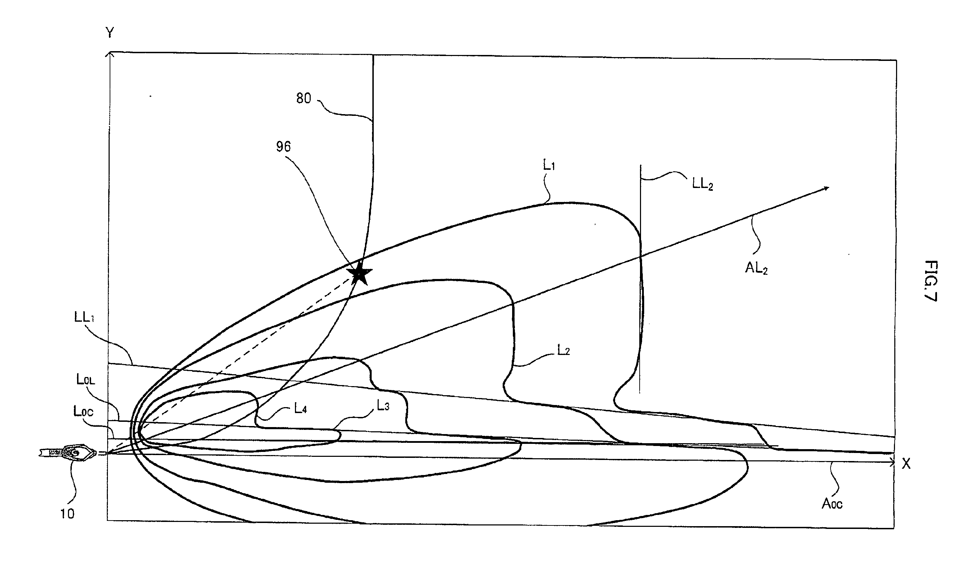

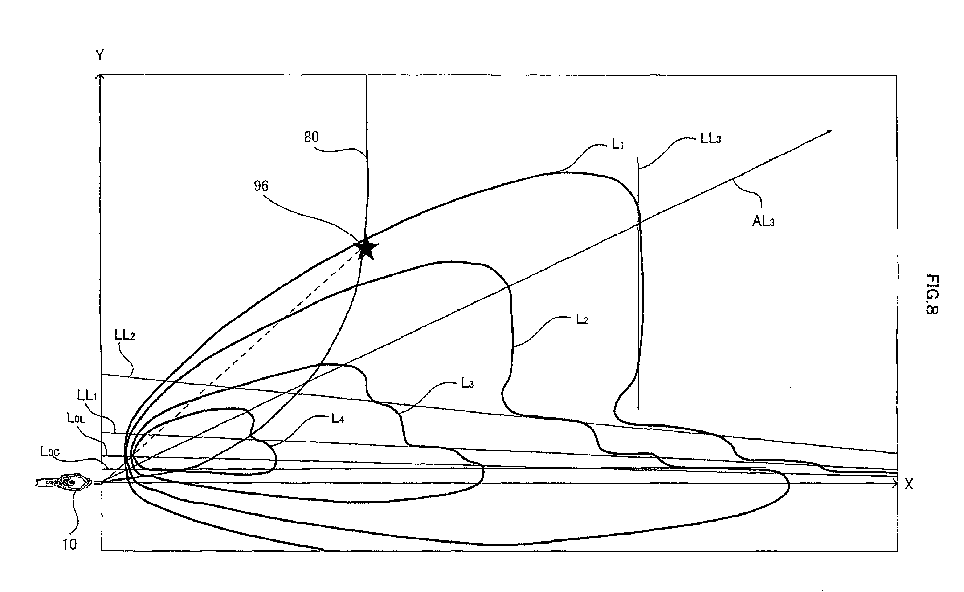

FIG. 6 shows iso-illuminance curves schematically representing the road surface light distributions of the headlights for the lean angle of the motorcycle 10 at reference value $K_1$. FIG. 7 shows iso-illuminance curves schematically representing the road surface light distributions of the headlights for the lean angle of the motorcycle 10 at reference value $K_2$. FIG. 8 shows iso-illuminance curves schematically representing the road surface light distributions of the headlights for the lean angle of the motorcycle 10 at reference value $K_3$.

In the figures, X indicates the direction straight ahead of the motorcycle 10 leaning into a turn, and Y the left direction along the width direction of the motorcycle 10. The path of the motorcycle 10 is indicated by reference numeral 80. The path 80 is a left curve, and has a predetermined radius. Ln (n = natural number) indicates the illuminance of the iso-illuminance curve. The iso-illuminance curves have greater illuminance values for greater values of n.

In FIG. 6, the motorcycle 10 turns left along the path 80 by tilting leftward, and the lean angle of the motorcycle 10 has reached the reference value $K_1$.

The center low beam light source $11L_C$ casts light forward in front (X direction) of the motorcycle 10, and the light axis $A_{0C}$ of the center low beam light source $11L_C$ extends forward in front of the motorcycle 10. The cutoff line $L_{0C}$

of the center low beam light source $11L_C$ has shifted closer to the left side of the motorcycle 10 as the lean angle increased, and extends forward in front of the motorcycle 10 from the left side of the motorcycle 10. Note that the cutoff line $L_{0C}$ shown in FIGS. 6 to 8 is the left-hand portion of the cutoff line $L_{0C}$ relative to the width direction of the vehicle (see FIGS. 3 and 5).

The cutoff line $L_{0L}$ of the left low beam light source $11L_L$ is more to the left of the cutoff line $L_{0C}$ of the center low beam light source $11L_C$ along the width direction of the vehicle (Y direction), and extends forward in front of the motorcycle 10 from the left side of the motorcycle 10.

The cutoff line $LL_1$ of the sub headlight light source 13La is in front (X direction) on the left side of the motorcycle 10, and extends parallel to the width direction of the vehicle (Y direction).

The iso-illuminance curve of illuminance $L_1$ extends forward (X direction) by spreading leftward relative to the width direction of the motorcycle 10 (Y direction), and extends inward along the cutoff line $LL_1$ of the sub headlight light source 13La relative to the width direction of the vehicle, and forward (X direction) along the cutoff line $L_{0L}$ of the left low beam light source $11L_L$.

The iso-illuminance curves of illuminances $L_2$ to $L_4$ are relatively similar in shape to the iso-illuminance curve of illuminance $L_1$. The region surrounded by the iso-illuminance curve of illuminance $L_2$ is more toward the motorcycle 10 in the region surrounded by the iso-illuminance curve of illuminance $L_1$. The region surrounded by the iso-illuminance curve of illuminance $L_3$ is more toward the motorcycle 10 in the region surrounded by the iso-illuminance curve of illuminance $L_2$. The iso-illuminance curve of illuminance $L_4$ is more toward the motorcycle 10 in the region surrounded by the iso-illuminance curve of illuminance $L_3$. Thus, in the road surface light distributions shown in FIG. 6, the region of the iso-illuminance curve of the brightest illuminance $L_4$ is relatively closer to the motorcycle 10.

The star 96 in the figures indicates a typical target view of the operator of the motorcycle 10. The target view 96 is on the path 80, and is the point where the motorcycle 10 traveling along the path 80 passes after a predetermined time period (r seconds).

Note that the target view 96 of the operator is relative to the location of the motorcycle 10 shown in FIG. 6. The target view 96 moves relative to the travel of the motorcycle 10. Specifically, the motorcycle 10 shown in FIG. 6 travels along the path 80 and arrives where the target view 96 was a predetermined time period r earlier. The target view 96 stays on the path 80 ahead.

In the example shown in FIG. 6, the region of the iso-illuminance curve of the highest illuminance (illuminance $L_4$) falls under the direction toward the target view 96 from the motorcycle 10. However, because the left low beam light source $11L_L$ is darker than brightness $Q_L$ when the lean angle of the motorcycle 10 is at the first reference value $K_1$ (FIGS. 4A and 4B, and FIG. 5A), the overlapping portions Z between the illumination range of the left low beam light source $11L_L$ and the illumination ranges of the other light sources do not become excessively bright. As a result, the illuminance of the iso-illuminance curve of the highest illuminance is kept low at $L_4$.

In FIG. 7, the motorcycle 10 turns left along the path 80 by tilting leftward, and the lean angle of the motorcycle 10 has reached the reference value $K_2$. The cutoff line $L_{0C}$ of the center low beam light source $11L_C$, the cutoff line $L_{0L}$ of the left low beam light source $11L_L$, and the cutoff line $LL_1$ of the sub headlight light source 13La appear in this order on the left side of the motorcycle 10 relative to the width direction of the vehicle (Y direction), extending forward in front of the motorcycle 10 from the left side of the motorcycle 10. The cutoff line $LL_2$ of the sub headlight light source 13Lb is in front on the left side of the motorcycle 10, and extends along the width direction of the vehicle (Y direction).

As in FIG. 6, the regions of the iso-illuminance curves of illuminances $L_1$ to $L_4$ spread ahead of the motorcycle 10, and the region of the iso-illuminance curve of the highest illuminance (illuminance $L_4$) is relatively closer to the motorcycle 10. The region of the iso-illuminance curve of the highest illuminance falls under the direction toward the target view 96 from the motorcycle 10. However, because the left low beam light source $11L_L$ is darker than brightness $Q_L$, and the sub headlight light source 13La is darker than brightness $Q_S$ (FIGS. 4A and 4B, and FIG. 5B) when the lean angle of the motorcycle 10 is at the second reference value $K_2$, the overlapping portions Z between the illumination ranges of the left low beam light source $11L_L$ and the sub headlight light sources 13La and the illumination ranges of the other light sources do not become excessively bright. As a result, the illuminance of the iso-illuminance curve of the highest illuminance is kept low at $L_4$, even though greater numbers of sub headlight light sources are turned on compared with the state shown in FIG. 6.

In FIG. 8, the motorcycle 10 turns left along the path 80 by tilting leftward, and the lean angle of the motorcycle 10 has reached the reference value $K_3$.

The cutoff line $L_{0C}$ of the center low beam light source $11L_C$, the cutoff line $L_{0L}$ of the left low beam light source $11L_L$, the cutoff line $LL_1$ of the sub headlight light source 13La, and the cutoff line $LL_2$ of the sub headlight light source 13Lb appear in this order on the left side of the motorcycle 10 relative to the width direction of the vehicle (Y direction), extending forward in front of the motorcycle 10 on the left side of the motorcycle 10. The cutoff line $LL_3$ of the sub headlight light source 13Lc is in front on the left side of the motorcycle 10, and extends along the width direction of the vehicle (Y direction).

As in FIGS. 6 and 7, the regions of the iso-illuminance curves of illuminances $L_1$ to $L_4$ spread ahead of the motorcycle 10, and the region of the iso-illuminance curve of the highest illuminance (illuminance $L_4$) is relatively closer to the motorcycle 10. The region of the iso-illuminance curve of the highest illuminance falls under the direction toward the target view 96 from the motorcycle 10. However, because the left low beam light source $11L_L$ is darker than brightness $Q_L$, and the sub headlight light sources 13La and 13Lb are darker than brightness $Q_S$ (FIGS. 4A and 4B, and FIG. 5C) when the lean angle of the motorcycle 10 is at the third reference value $K_3$, the overlapping portions Z between the illumination ranges of the left low beam light source $11L_L$ and the sub headlight light sources 13La and 13Lb and the illumination ranges of the other light sources do not become excessively bright. As a result, the illuminance of the iso-illuminance curve of the highest illuminance is kept low at $L_4$, even though greater numbers of sub headlight light sources are turned on compared with the states shown in FIGS. 6 and 7.

Comparative Example

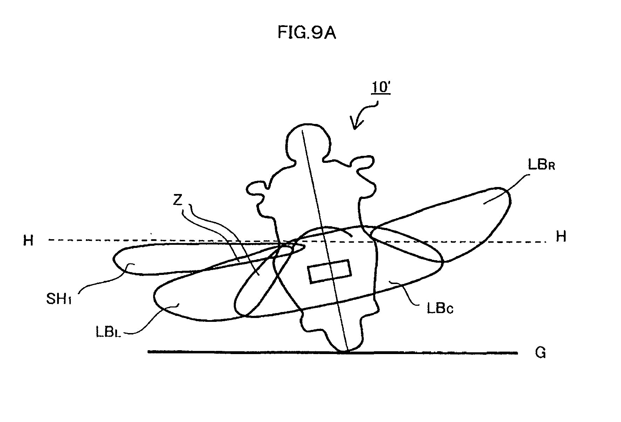

A motorcycle 10' is described below in which the headlights do not dim according to the lean angle, with reference to FIG. 9A to FIG. 12. Note that, in FIG. 9A to FIG. 12, the same reference numerals are used for the corresponding elements described with reference to FIG. 5A to FIG. 8.

FIG. 9A is a diagram schematically representing the screen light distributions of the headlights when the lean angle of the motorcycle 10' in which the headlights do not dim according to the lean angle is at reference value $K_1$.

FIG. 9A does not differ from FIG. 5A, except that the left low beam light source $11L_L$ does not dim according to the lean angle. Because the left low beam light source $11L_L$ does not dim, the overlapping portion Z of the illumination ranges $LB_L$ and $LB_C$, and the overlapping portion Z of the illumination ranges $SH_1$ and $LB_C$ are excessively bright.

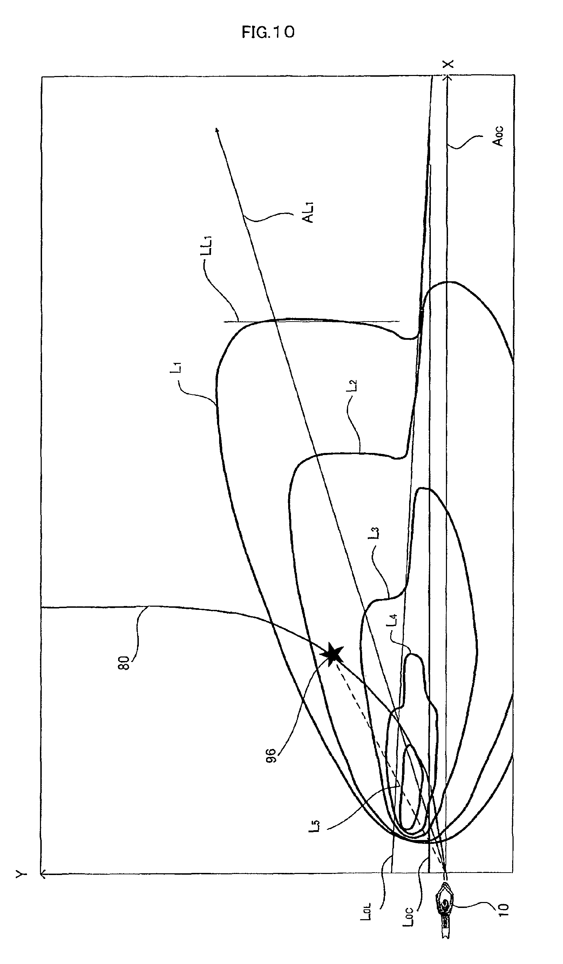

FIG. 10 shows iso-illuminance curves schematically representing the road surface light distributions of the headlights when the lean angle of the motorcycle 10' in which the headlights do not dim according to the lean angle is at reference value $K_1$.

The iso-illuminance curves shown in FIG. 10 differ from the iso-illuminance curves of FIG. 6 in that the illuminance of the iso-illuminance curve of the highest illuminance has reached $L_5$.

In the state shown in FIG. 9A, the overlapping portion Z of the illumination ranges $LB_L$ and $LB_C$ and the overlapping portion Z of the illumination ranges $SH_1$ and $LB_C$ are excessively bright as mentioned above, and the illumination range $LB_L$ closer to the ground G is relatively brighter. Thus, the region of the iso-illuminance curve of illuminance $L_5$ occurs near the motorcycle 10'.

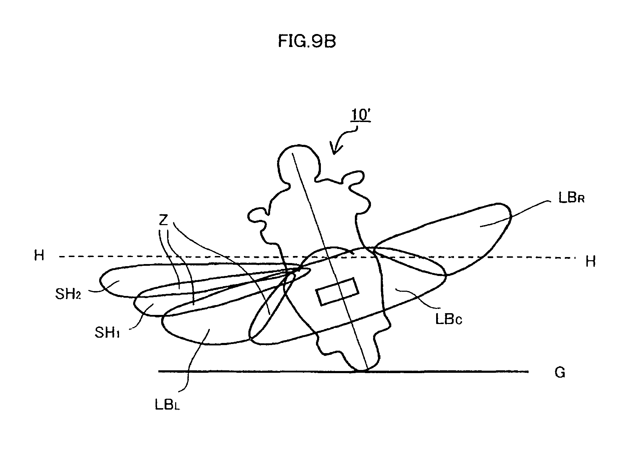

FIG. 9B is a diagram schematically representing the screen light distributions of the headlights when the lean angle of the motorcycle 10' in which the headlights do not dim according to the lean angle is at second reference value $K_2$.

FIG. 9B does not differ from FIG. 5B, except that the left low beam light source $11L_L$ and the sub headlight light source 13La do not dim according to the lean angle. Because the left low beam light source $11L_L$ and the sub headlight light source 13La do not dim, the overlapping portion Z of the illumination ranges $LB_C$ and $LB_L$, the overlapping portion Z of the illumination ranges $LB_L$ and $SH_1$, the overlapping portion Z of the illumination ranges $LB_C$ and $LB_R$, and the overlapping portion Z of the illumination ranges $SH_1$ and $SH_2$ are excessively bright.

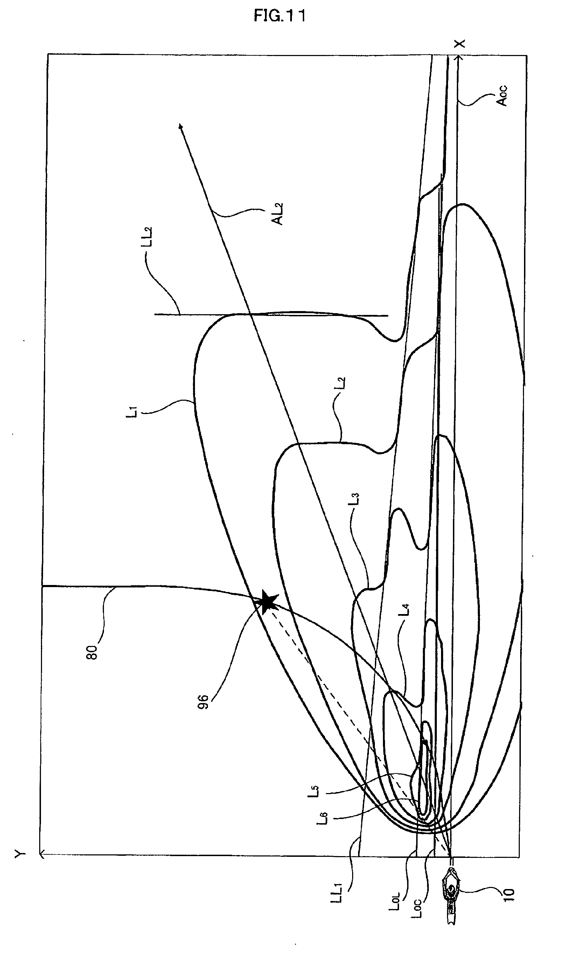

FIG. 11 shows iso-illuminance curves schematically representing the road surface light distributions of the headlights when the lean angle of the motorcycle 10' in which the headlights do not dim according to the lean angle is at reference value $K_2$.

The iso-illuminance curves shown in FIG. 11 differ from the iso-illuminance curves of FIG. 7 in that the illuminance of the iso-illuminance curve of the highest illuminance has reached $L_6$.

In the state shown in FIG. 9B, the overlapping portion Z of the illumination ranges $LB_C$ and $LB_L$, the overlapping portion Z of the illumination ranges $LB_L$ and $SH_1$, and the overlapping portion Z of the illumination ranges $SH_1$ and $SH_2$ are excessively bright as mentioned above, and the distance between the illumination range $LB_L$ and ground G is shorter. Thus, the region of the iso-illuminance curve of illuminance $L_6$ occurs near the motorcycle 10'.

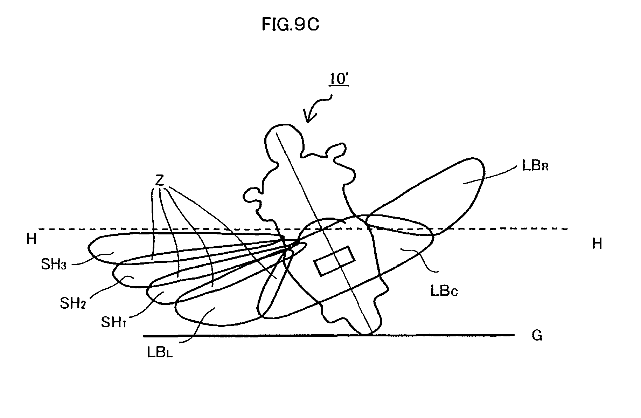

FIG. 9C is a diagram schematically representing the screen light distributions of the headlights when the lean angle of the motorcycle 10' in which the headlights do not dim according to the lean angle is at reference value $K_3$.

FIG. 9C does not differ from FIG. 5C, except that the left low beam light source $11L_L$, the sub headlight light source 13La, and the sub headlight light source 13Lb do not dim according to the lean angle. Because the left low beam light source $11L_L$, the sub headlight light source 13La, and the sub headlight light source 13Lb do not dim, the overlapping portion Z of the illumination ranges $LB_C$ and $LB_L$, the overlapping portion Z of the illumination ranges $LB_L$ and $SH_1$, the overlapping portion Z of the illumination ranges $SH_1$ and $SH_2$, and the overlapping portion Z of the illumination ranges $SH_2$ and $SH_3$ are excessively bright.

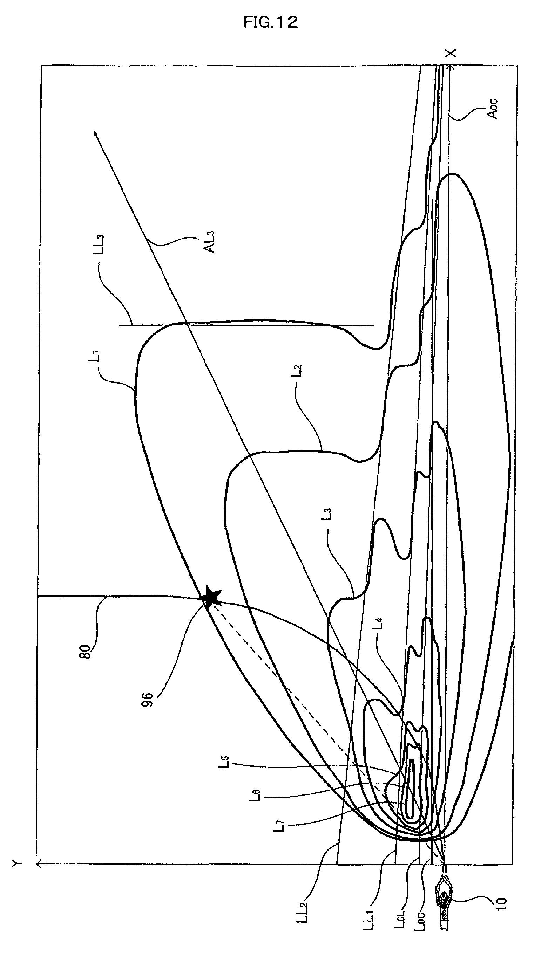

FIG. 12 shows iso-illuminance curves schematically representing the road surface light distributions of the headlights when the lean angle of the motorcycle 10' in which the headlights do not dim according to the lean angle is at reference value $K_3$.

The iso-illuminance curves shown in FIG. 12 differ from the iso-illuminance curves of FIG. 8 in that the illuminance of the iso-illuminance curve of the highest illuminance has reached $L_7$.

In the state shown in FIG. 9C, the overlapping portion Z of the illumination ranges $LB_C$ and $LB_L$, the overlapping portion Z of the illumination ranges $LB_L$ and $SH_1$, the overlapping portion Z of the illumination ranges $SH_1$ and $SH_2$, and the overlapping portion Z of the illumination ranges $SH_2$ and $SH_3$ are excessively bright as mentioned above, and the distance between the illumination range $LB_L$ and ground G is even shorter. Thus, the region of the iso-illuminance curve of illuminance $L_7$ occurs near the motorcycle 10'.

As described above, in the motorcycle 10' of the comparative example, the regions of the iso-illuminance curves of illuminances $L_5$ to $L_7$ occur closer to the motorcycle 10'. This is in contrast to the motorcycle 10 of the embodiment of the present invention, in which the region of the iso-illuminance curve that occurs near the motorcycle 10 is kept at illuminance $L_4$.

This makes it possible to illuminate the target view with the center low beam light source $L_C$ and the sub headlight light source 13La while suppressing the reflected light of relatively high intensity from occurring in a close range to the operator. Accordingly, the target view can be suppressed from appearing dark to the operator. Further, the discomfort brought to the operator by the intense reflected light off the road surface can be suppressed.

In the motorcycle 10 of First Embodiment, the headlight unit 30 includes the center low beam light source $11L_C$ as the first light source, and the left low beam light source $11L_L$, the right low beam light source $11L_R$, and the sub headlight light sources 13La to 13Lc and 13Ra to 13Rc as the second light sources. However, the present invention is not limited to this example, provided that the headlight unit of the present invention includes a first light source, and a plurality of second light sources that casts light forward and outward of the vehicle on one side of the width direction of the vehicle.

The first light source is not necessarily required to be a single light source, and more than one first light source may be provided.

The plurality of second light sources may include the low beam light sources and the sub headlight light source as in the present embodiment, or may be realized solely by the low beam light sources or the sub headlight light sources. When the plurality of second light sources includes the low beam light sources and the sub headlight light sources, a smaller reference value is set for the low beam light source, and a larger reference value is set for the sub headlight light source. The plurality of second light sources preferably includes the low beam light sources.

Specifically, the present invention may be configured as follows.

(1-1) A headlight unit (30) of (1),
wherein the first light source is a single or a plurality of center low beam light sources ($11L_C$), and
wherein the second light source includes a single pair or multiple pairs of left and right low beam light sources ($11L_L$, $11L_R$), and a single pair or multiple pairs of sub headlight light sources (13La to 13Lc, 13Ra to 13Rc).
(1-2) A headlight unit (30) of (1),
wherein the first light source is a single or a plurality of center low beam light sources ($11L_C$), and
wherein the second light source is a single pair or multiple pairs of left and right low beam light sources ($11L_L$, $11L_R$).
(1-3) A headlight unit (30) of (1),
wherein the first light source is a single or a plurality of center low beam light sources ($11L_C$), and
wherein the second light source is a single pair or multiple pairs of sub headlight light sources (13La to 13Lc, 13Ra to 13Rc).

Note that a single pair of left and right low beam light sources includes a left low beam light source that casts light forward and leftward of the width direction of the vehicle (10), and a right low beam light source that casts light forward and rightward of the width direction of the vehicle (10).

Further, a single pair of sub headlight light sources includes a sub headlight light source that casts light forward and leftward of the width direction of the vehicle (10), and a sub headlight light source that casts light forward and rightward of the width direction of the vehicle (10).

In the present embodiment, the low beam light source 11 L is described as being divided into a plurality of light sources, specifically the low beam light sources $11L_C$, $11L_L$, and $11L_R$. However, the present invention is not limited to this example, and the low beam light source 11 L may not be divided. In this case, the low beam light source 11 L corresponds to the first light source of the present invention, and the breadth of the illumination range of the low beam light source 11 L relative to the width direction of the vehicle is wider than the illumination range of the center low beam light source $11L_C$ representing one of the divided light sources of the low beam light source 11L.

Specifically, the present invention also may be configured as follows.

(1-4) A headlight unit of (1),
wherein the first light source is a low beam light source (11L), and
wherein the second light source is a single pair or multiple pairs of sub headlight light sources (13La to 13Lc, 13Ra to 13Rc).

(1-5) A headlight unit of (1),
wherein the first light source is a main headlight (11) that includes a low beam light source (11 L) and a high beam light source (11 H), and
wherein the second light source is a single pair or multiple pairs of sub headlight light sources (13La to 13Lc, 13Ra to 13Rc).

In the motorcycle 10 of the present embodiment, the headlight unit 30 is formed by physically integrating the main headlight 11 and the sub headlight units 13L and 13R. However, the present invention is not limited to this example, and the main headlight 11 and the sub headlight units 13L and 13R may be provided as separate members. Further, in the present invention, the headlight unit including the low beam light source and the sub headlight light source may be separately provided from the high beam light source.

The sub headlight 13 includes the sub headlight units 13L and 13R disposed on each side of the width direction of the vehicle. However, the present invention is not limited to this example. For example, a single sub headlight unit may be realized as the integral unit of the sub headlight units 13L and 13R disposed on each side of the width direction of the vehicle. In this case, the sub headlight unit includes a plurality of headlight light sources having illumination ranges on one side of the width direction of the vehicle and provided on each side of the width direction of the vehicle.

Further, in the present embodiment, the light sources included in the headlight unit 30 are described as being a physically integral unit. However, the present invention is not limited to this example, and each light source may be physically separated. In this case, the light sources may be installed in the motorcycle 10 (vehicle) after being assembled into the headlight unit 30. Alternatively, the light sources may be individually installed in the motorcycle 10. In this case, the light sources form the headlight unit 30 by being mounted to the motorcycle 10.

The lean angle sensor 22 and the vehicle speed sensor 23 correspond to the detection unit that detects variables used to find the lean angle of the motorcycle 10. In the present embodiment, the detection unit includes the lean angle sensor 22 and the vehicle speed sensor 23. However, the present invention is not limited to this example, and, for example, the detection unit may include only the lean angle sensor 22, and not the vehicle speed sensor 23. The controller 20 corresponds to the control unit of the present invention. However, the hardware configuration is not limited to this example in the present invention. The control unit determines whether the lean angle of the motorcycle 10 has reached the reference value, using the variables detected by the detection unit. Here, the control unit is not necessarily required to calculate the lean angle, and the specific processing performed by the control unit is not particularly limited. For example, data of a table that correlates the angular velocity (roll rate) and vehicle speed to the result of whether the lean angle has reached the first reference value may be stored in the memory of the controller 20 provided as the control unit. In this case, the control unit can refer to the table based on angular velocity and vehicle speed to determine whether the lean angle has reached the first reference value, without calculating the lean angle.

In the present embodiment, the lean angle is the tilt angle of the vehicle leaning into a curve, relative to the upright state (vertical direction). However, the present invention is not limited to this example, and the lean angle of the vehicle leaning into a curve may be the tilt angle relative to the direction perpendicular to the road surface. When the tilt angle of the vehicle leaning into a curve is relative to the direction perpendicular to the road surface, the tilt angle may be measured by using methods and devices known in the art.

Further, in the present embodiment, the headlight unit 30 is described as being separately provided from the control unit (controller 20) and the detection unit (lean angle sensor 22 and vehicle speed sensor 23). However, the present invention is not limited to this example. The headlight unit may include at least one of the control unit, a communication unit, and the detection unit.

In the present embodiment, a total of four second light sources are disposed on each side of the width direction of the vehicle. However, the present invention may be provided with at least two second light sources that cast light on one side of the width direction of the vehicle. Further, in the present invention, the second light sources are not necessarily required to be disposed on each side of the width direction of the vehicle, provided that the vehicle includes a plurality of second light sources that casts light leftward of the width direction of the vehicle, and a plurality of second light sources that casts light rightward of the width direction of the vehicle. Preferably, at least three sub headlight light sources are provided that cast light on one side of the width direction of the vehicle.

In the present embodiment, a single second light source has a single light source, and a single reference value and a single specific value are set for this single light source. However, in the present invention, the number of light sources in a single second light source is not particularly limited. For example, a single second light source may include more than one light source, and a single reference value may be set for these light sources.

The present embodiment has been described through the case where the reference value and the specific value of when the brightness of the second light source increases with increasing lean angles are the same as the reference value and the specific value of when the brightness of the second light source decreases with decreasing lean angles. However, the reference values and the specific values may be different. Specifically, the reference value and the specific value of when the brightness increases, and the reference value and the specific value of when the brightness decreases may be set for a single second light source.

The present embodiment has been described through the case where the brightness of the second light source varies according to the lean angle. However, the present invention is not limited to this example, and the second light sources may be configured so that the function of lighting up according to the lean angle is manually switched ON/OFF. Specifically, when the function is manually turned off, the low beam light source as the second light source turns on, and the sub headlight light source as the second light source turns off. On the other hand, when the function is ON, the brightnesses of the low beam light source and the sub headlight light source as the second light sources vary according to the lean angle.

Note here that even in this case the second light source turns on according to the lean angle, not manually. On the other hand, the ON/OFF of the flashers are manually switched. This distinguishes the second light source from the flashers and the first light source.

The second light source may be adapted to receive manually input ON/OFF instructions. In this case, the brightness of the second light source varies according to the lean angle in the absence of the instructions, whereas, in the presence of the instructions, the second light source is turned on and off according to the instructions. For example, upon input of the ON instruction, the second light source turns on as a whole or as the sub headlight light source, irrespective of the lean angle. Upon input of the OFF instruction, the second light source turns off as a whole or as the sub headlight light source, irrespective of the lean angle. In this case, the headlight system includes an input section (for example, a switch) used to manually enter the ON/OFF instructions for the second light source or the sub headlight light source. Upon input of the instruction, the control unit turns on or off the second light source or the sub headlight light source as instructed, and, in the absence of the instructions, varies the brightness of the second light source according to the lean angle. Even in this case, the second light source still functions to turn on according to the lean angle, and distinguishes itself from the flashers and the first light source.

Further, the second light source may be adapted so that the brightness varies with the lean angle when the lean angle is at or above the lowest reference value, and varies manually when the lean angle is below the smallest reference value (for example, when traveling straight). Even in this case, the second light source still functions to turn on according to the lean angle, and distinguishes itself from the flashers and the first light source.

The present embodiment has been described through the case where the second light source turns on according to the lean angle. The second light source turns on according to the lean angle, because the second light source mainly serves to provide light for the visibility of the operator of the vehicle. As such, the second light source is not necessarily required to turn on according to the lean angle under bright conditions such as in daytime. Further, only the sub headlight light source as the second light source may not be turned on according to the lean angle under such bright conditions.

While only a selected embodiment has been chosen to illustrate the present invention, it will be apparent to those skilled in the art from this disclosure that various changes and modifications can be made herein without departing from the scope of the invention as defined in the appended claims. Furthermore, the foregoing descriptions of the embodiment according to the present invention are provided for illustration only, and not for the purpose of limiting the invention as defined by the appended claims and their equivalents.

The present teaching can suppress the target view of the operator from appearing dark in the process of increasing or decreasing the lean angle of the vehicle.

The present inventors conducted intensive studies to overcome the problem that the vehicle involves a dark target view even with the illuminations provided by the sub headlight light sources, and obtained the following findings.

The illumination range of the sub headlight light source on a road surface approaches the vehicle as the lean angle of the vehicle increases. The brightness of the sub headlight light source is inversely proportional to the square of the distance from the sub headlight light source. As such, there are cases where the reflected light off the road surface becomes excessively high under varying road conditions as the illumination range of the sub headlight light source on the road surface approaches the vehicle with increasing lean angles. The operator tends to perceive strong reflected light from the road surface when the intensity of the reflected light off the road surface increases in this fashion.

The target view of the operator traveling along a curve is typically on the path of the vehicle and inside of the curve ahead in the direction of travel. The target view should thus be illuminated with the sub headlight light source to provide a clear view to the operator. Further, because the target view is straight ahead of the vehicle when the vehicle has returned to the upright position from the lean position, the operator should preferably have a clear view also in this direction.

However, because the operator perceives strong reflected light from the road surface when the intensity of the reflected light off the road surface increases in the manner described above, the inside of the curve ahead of the vehicle appears relatively darker. Specifically, because of the reflected light of relatively high intensity produced near the operator, the desired target view of the operator often appears relatively darker.

The present teaching relates to the following configurations.

  (1) A headlight unit for a vehicle that leans into turns,

the headlight unit comprising:

a first light source that casts light forward in front of the vehicle; and
a plurality of second light sources that casts light forward and outward of the vehicle on one side of the width direction of the vehicle,

wherein the plurality of second light sources has illumination ranges positioned outward of an illumination range of the first light source and at different positions relative to the vertical direction of the vehicle in the upright state of the vehicle,

wherein the brightnesses of the second light sources vary according to the lean angle of the vehicle,

wherein the second light sources achieve predetermined brightnesses when the lean angle of the vehicle is at a reference value individually set for each of the second light sources, and wherein the illumination ranges of the second light sources are positioned further upward for the second light sources having larger reference values in the upright state of the vehicle, and

wherein when the lean angle of the vehicle reaches a specific value greater than the reference value set for one of the second light sources, and the first light source and an upper second light source having a larger reference value than the one of the second light source are on, the one of the second light sources becomes darker than the predetermined brightness.

According to the configuration of (1), when the lean angle of the vehicle reaches a specific value greater than the reference value set for one of the second light sources (lower second light source), and the first light source (for example, a low beam light source of a main headlight) and an upper second light source having a larger reference value than the one of the second light source are on, the one of the second light sources becomes darker than the predetermined brightness.

The upper second light source illuminates inside of the curve ahead in the direction of travel. The first light source illuminates the direction straight ahead of the vehicle. The lower second light source, on the other hand, provides illumination between the illumination range of the first light source and the illumination range of the upper second light source, and accordingly the distance between the vehicle and the illumination range of the lower second light source on the road surface is relatively closer. The reflected light of the lower second light source off the road surface can thus be reduced by lowering the brightness of the lower second light source. This makes it possible to illuminate the target view with the first light source and the upper second light source while suppressing the reflected light of relatively high intensity from occurring in a close range to the operator. Accordingly, the target view can be suppressed from appearing dark to the operator. Further, the discomfort brought to the operator by the intense reflected light off the road surface can be suppressed.

Note that the term "upper" in the "upper second light source", and the term "lower" in the "lower second light source" are with respect to the positions of the illumination ranges of the screen light distributions in the upright state of the vehicle, not the positions of the illumination ranges of the screen light distributions when the vehicle is leaning.

(2) The headlight unit of (1),
wherein the plurality of second light sources includes a sub headlight light source configured to have an illumination range that includes a space above a horizontal line in the upright state of the vehicle, and
wherein the illumination range of the sub headlight light source is in a space below the horizontal line when the lean angle of the vehicle reaches a reference value set for the sub headlight light source.
According to the configuration of (2), the illumination range of the sub headlight is in a space below the horizontal line when the lean angle of the vehicle reaches the reference value and the sub headlight light source has the predetermined brightness. This makes it possible to suppress glare.
(3) The headlight unit of (1) or (2),
wherein the plurality of second light sources includes a sub headlight light source configured to have an illumination range that includes a space above a horizontal line in the upright state of the vehicle, and
wherein the angle created by the cutoff line and the horizontal line of the sub headlight light source when the lean angle of the vehicle reaches a reference value set for the sub headlight light source is smaller than the angle created by the cutoff line and the horizontal line of the sub headlight light source in the upright state of the vehicle.
According to the configuration of (3), because the cutoff line of the sub headlight light source is nearly horizontal when the lean angle reaches the reference value, a wide illumination range can be provided on the road surface while preventing glare due to the predetermined brightness.
(4) The headlight unit of any one of (1) to (3),
wherein the plurality of second light sources includes a sub headlight light source configured to have an illumination range that includes a space above a horizontal line in the upright state of the vehicle, and

wherein the angle created by the cutoff line and the horizontal line of the sub headlight light source when the lean angle of the vehicle reaches the specific value set for the sub headlight light source is larger than the angle created by the cutoff line and the horizontal line of an upper sub headlight light source having a larger reference value than the sub headlight light source.

According to the configuration of (4), the angle created by the cutoff line and the horizontal line of the lower sub headlight light source is greater than the angle created by the cutoff line and the horizontal line of the upper sub headlight light source. In other words, the illumination range of the lower sub headlight light source is closer to the vehicle than the illumination range of the upper sub headlight light source on the road surface. Thus, the reflected light of the lower sub headlight light source off the road surface can be reduced by lowering the brightness of the lower sub headlight light source. Accordingly, the target view can be suppressed from appearing dark to the operator. Further, the discomfort brought to the operator by the intense reflected light off the road surface can be suppressed.

(5) The headlight unit of any one of (1) to (4),
wherein the first light source and the second light sources have fixed light axes, and
wherein the illumination range of the first light source partially overlaps the illumination range of the lowest second light source in the upright state of the vehicle, and wherein the illumination ranges of the second light sources partially overlap one another in the upright state of the vehicle.

According to the configuration of (5), the target view can be sufficiently covered by the illumination ranges at all times.

(6) The headlight unit of any one of (1) to (5),
wherein the first light source and some of the plurality of second light sources are low beam light sources of a main headlight that has an illumination range below a horizontal line in the upright state of the vehicle,
wherein the remaining second light sources are sub headlight light sources configured to have illumination ranges that include a space above the horizontal line in the upright state of the vehicle, and
wherein the low beam light sources as the second light sources have a reference value of 0°.

According to the configuration of (6), a wide illumination range can be provided ahead of the vehicle, because the low beam light source as the second light source has the predetermined brightness even when the vehicle is in the upright state.

Note that, despite the designation "low beam light source", the low beam light source as the second light source has the function of the second light source whereby the brightness varies according to the lean angle. Specifically, the low beam light source achieves a brightness below the predetermined brightness when the lean angle of the vehicle reaches the specific value set for the low beam light source.

(7) A headlight system for a vehicle that leans into turns,
the headlight system comprising:

> the headlight unit of any one of (1) to (6);
> a control unit that varies the brightnesses of the second light sources according to the lean angle of the vehicle; and
> a detection unit that detects a variable used to find the lean angle of the vehicle,

wherein when the lean angle of the vehicle reaches a specific value greater than the reference value set for one of the second light sources, and the first light source and an upper second light source having a larger reference value than the one of the second light source are on, the one of the second light sources becomes darker than the predetermined brightness.

According to the configuration of (7), the brightness of the lower second light source that provides illumination between the illumination range of the first light source and the illumination range of the upper second light source is decreased. In this way, the reflected light of the lower second light source off the road surface can be reduced. The target view can thus be illuminated by the first light source and upper second light source while suppressing the reflected light of relatively high intensity from occurring in a close range to the operator. This makes it possible to realize an AFS (Adaptive Front-Lighting System) that can suppress the darkening of the target view, and the discomfort brought to the operator by the intense reflected light off the road surface.

(8) A vehicle that leans into turns, wherein the vehicle comprises the system of (7).

According to the configuration of (8), the brightness of the lower second light source that provides illumination between the illumination range of the first light source and the illumination range of the upper second light source is decreased. In this way, the reflected light of the lower second light source off the road surface can be reduced. The target view can thus be illuminated by the first light source and upper second light source while suppressing the reflected light of relatively high intensity from occurring in a close range to the operator. Accordingly, the target view can be suppressed from appearing dark to the operator. Further, the discomfort brought to the operator by the intense reflected light off the road surface can be suppressed.

According to the present teaching, the light axis is the straight line that passes the light source and the center of the maximum illuminance portion of the emitted light. The center of the maximum illuminance portion of the emitted light can be specified by casting light from the light source onto a screen disposed in front of the light source. This screen illuminance test can be performed according to the method specified by JIS D1619. The cutoff line and the illumination range also can be specified from the results of the screen illuminance test (for example, from an iso-illuminance curve). In the present invention, the illumination range is the illumination range of a predetermined illuminance, and the illuminance is not particularly limited. Further, the cutoff line and the illumination range in planar view can be specified from a road surface light distribution converted from the result of the screen illuminance test. The conversion into a road surface light distribution can be performed by using a method known in the art. Specifically, a screen illuminance value may be converted into a road surface illuminance value by common plotting and geometric calculations. In this case, the following equation (I) may be used.

$$\text{Road surface illuminance (Lx)} = \text{screen illuminance (Lx)} \times [(\text{distance between D and F (m)})/(\text{distance between D and E (m)})]^2 \qquad (I),$$

where D is the light source, E is a point on the road surface, and F is the intersection between a screen disposed between D and E and the line connecting D to E.

Moreover, the embodiments discloses a headlight unit for a vehicle that leans into turns comprising: a first light source; and a plurality of second light sources, wherein the plurality of second light sources has illumination ranges positioned outward of an illumination range of the first light source and at different positions relative to a first direction, a detection unit for detecting a variable according to a lean angle of the vehicle, a control unit for varying the brightnesses of the second light sources according to the lean angle of the vehicle based on the variable detected by the detection unit, wherein the second light sources achieve predetermined brightnesses when the lean angle of the vehicle is at a reference value individually set for each of the second light sources, the illumination ranges of the second light sources are positioned further upward for the second light sources having larger reference values in an upright state of the vehicle, and when the lean angle of the vehicle reaches a specific value greater than the reference value set for one of the second light sources, and the first light source and an upper second light source having a larger reference value than the one of the second light source are on, the one of the second light sources becomes darker than the predetermined brightness.

The first light source is configured to cast light forward in front of the vehicle, and the plurality of second light sources are configured to cast light forward and outward of the vehicle on one side of the width direction of the vehicle, wherein the plurality of second light sources having the illumination ranges positioned outward of the illumination range of the first light source are at different positions relative to the first direction that is the vertical direction of the vehicle in the upright state of the vehicle.

The plurality of second light sources includes a sub headlight light source configured to have an illumination range that includes a space above a horizontal line in the upright state of the vehicle, and the illumination range of the sub headlight light source is in a space below the horizontal line when the lean angle of the vehicle reaches a reference value set for the sub headlight light source. The plurality of second light sources includes a sub headlight light source configured to have an illumination range that includes a space above a horizontal line in the upright state of the vehicle, and the angle created by the cutoff line and the horizontal line of the sub headlight light source when the lean angle of the vehicle reaches a reference value set for the sub headlight light source is smaller than the angle created by the cutoff line and the horizontal line of the sub headlight light source in the upright state of the vehicle. The plurality of second light sources includes a sub headlight light source configured to have an illumination range that includes a space above a horizontal line in the upright state of the vehicle, and the angle created by the cutoff line and the horizontal line of the sub headlight light source when the lean angle of the vehicle reaches the specific value set for the sub headlight light source is larger than the angle created by the cutoff line and the horizontal line of an upper sub headlight light source having a larger reference value than the sub headlight light source. The first light source and the second light sources have fixed light axes, and the illumination range of the first light source partially overlaps the illumination range of the lowest second light source in the upright state of the vehicle, and wherein the illumination ranges of the second light sources partially overlap one another in the upright state of the vehicle. The first light source and some of the plurality of second light sources are low beam light sources of a main headlight that has an illumination range below a horizontal line in the upright state of the vehicle, the remaining second light sources are sub headlight light sources configured to have illumination ranges that include a space above the horizontal line in the upright state of the vehicle, and the low beam light sources as the second light sources have a reference value of 0°.

Moreover, the embodiments also discloses a method for illumination of forward and outward area of a vehicle that leans into turns, said method comprises: casting light forward in front of the vehicle by a first light source; and casting light forward and outward of the vehicle on one side of the width direction of the vehicle by a plurality of second light sources, wherein the plurality of second light sources has illumination ranges positioned outward of an illumination range of the first light source and at different positions relative to the vertical direction of the vehicle in the upright state of the vehicle, detecting a lean angle of the vehicle, and varying the brightnesses of the second light sources according to the lean angle of the vehicle based on the variable detected by the detection unit, wherein the second light sources achieve predetermined brightnesses when the lean angle of the vehicle is at a reference value individually set for each of the second light sources, the illumination ranges of the second light sources are positioned further upward for the second light sources having larger reference values in an upright state of the vehicle, and when the lean angle of the vehicle reaches a specific value greater than the reference value set for one of the second light sources, and the first light source and an upper second light source having a larger reference value than the one of the second light source are on, the one of the second light sources becomes darker than the predetermined brightness.

**Claims**

1. A headlight unit for a vehicle (10) adapted to lean into turns comprising:

a first light source (11L$_C$) adapted to cast light forward in front of the vehicle (10); and a plurality of second light sources (11L$_L$, 11L$_R$, 13La-Lc, 13Ra-Rc) adapted to cast light forward and outward of the vehicle (10) on one side of the width direction of the vehicle (10),
wherein the plurality of second light sources (11L$_L$, 11L$_R$, 13La-Lc, 13Ra-Rc) has illumination ranges positioned outward of an illumination range of the first light source (11L$_C$) and at different positions relative to the vertical direction of the vehicle (10) in the upright state of the vehicle (10);
a detection unit (22) for detecting a variable according to a lean angle of the vehicle (10),
a control unit (20) for varying the brightnesses of the second light sources (11L$_L$, 11L$_R$, 13La-Lc, 13Ra-Rc) according to the lean angle of the vehicle (10) based on the variable detected by the detection unit (22), wherein the second light sources (11L$_L$, 11L$_R$, 13La-Lc, 13Ra-Rc) are controlled to achieve predetermined brightnesses when the lean angle of the vehicle (10) is at a reference value individually set for each of the second light sources (11L$_L$, 11L$_R$, 13La-Lc, 13Ra-Rc),
**characterized in that** the illumination ranges of the second light sources (11L$_L$, 11L$_R$, 13La-Lc, 13Ra-Rc) are positioned further upward for the second light sources (11L$_L$, 11L$_R$, 13La-Lc, 13Ra-Rc) having larger reference values in the upright state of the vehicle (10), and
when the lean angle of the vehicle (10) reaches a specific value greater than the reference value set for one of the second light sources (11L$_L$, 11L$_R$, 13La-Lc, 13Ra-Rc), and the first light source (11L$_C$) and an upper second light source having a larger reference value than the one of the second light source are on, the one of the second light sources (11L$_L$, 11L$_R$, 13La-Lc, 13Ra-Rc) is controlled to become darker than the predetermined brightness.

2. A headlight unit according to claim 1, **characterized in that** the plurality of second light sources includes a sub headlight light source (13La-Lc,13Ra-Rc) configured to have an illumination range that includes a space above a horizontal line in the upright state of the vehicle (10), and the illumination range of the sub headlight light source (13La-Lc, 13Ra-Rc) is in a space below the horizontal line when the lean angle of the vehicle (10) reaches a reference value set for the sub headlight light source (13La-Lc,13Ra-Rc).

3. A headlight unit according to claim 1 or 2, **characterized in that** the plurality of second light sources includes a sub headlight light source (13La-Lc,13Ra-Rc) configured to have an illumination range that includes a space above a horizontal line in the upright state of the vehicle (10), and the angle created by the cutoff line and the horizontal line of the sub headlight light source (13La-Lc,13Ra-Rc) when the lean angle of the vehicle (10) reaches a reference value set for the sub headlight light source (13La-Lc,13Ra-Rc) is smaller than the angle created by the cutoff line and the horizontal line of the sub headlight light source (13La-Lc,13Ra-Rc) in the upright state of the vehicle (10).

4. A headlight unit according to any one of claims 1 to 3, **characterized in that** the plurality of second light sources includes a sub headlight light source (13La-Lc,13Ra-Rc) configured to have an illumination range that includes a space above a horizontal line in the upright state of the vehicle (10), and the angle created by the cutoff line and the horizontal line of the sub headlight light source (13La-Lc, 13Ra-Rc) when the lean angle of the vehicle (10) reaches the specific value set for the sub headlight light source (13La-Lc,13Ra-Rc) is larger than the angle created by the cutoff line and the horizontal line of an upper sub headlight light source (13La-Lc,13Ra-Rc) having a larger reference value than the sub headlight light source (13La-Lc,13Ra-Rc).

5. A headlight unit according to any one of claims 1 to 4, **characterized in that** the first light source (11L$_C$) and the second light sources ($11L_L$, $11L_R$, 13La-Lc, 13Ra-Rc) have fixed light axes, and the illumination range of the first light source ($11L_C$) partially overlaps the illumination range of the lowest second light source ($11L_L$, $11L_R$, 13La-Lc, 13Ra-Rc) in the upright state of the vehicle (10), and wherein the illumination ranges of the second light sources ($11L_L$, $1L_R$, 13La-Lc, 13Ra-Rc) partially overlap one another in the upright state of the vehicle (10).

6. A headlight unit according to any one of claims 1 to 5, **characterized in that** the first light source (11 Lc) and some of the plurality of second light sources are low beam light sources ($11L_L$, $11L_R$) of a main headlight (11) that has an illumination range below a horizontal line in the upright state of the vehicle (10), the remaining second light sources (13La-Lc,13Ra-Rc) are sub headlight light sources configured to have illumination ranges that include a space above the horizontal line in the upright state of the vehicle (10), and the low beam light sources as the second light sources ($11L_L$, $11L_R$, 13La-Lc, 13Ra-Rc) have a reference value of 0°.

7. A vehicle that leans into turns, wherein the vehicle (10) comprises a headlight unit according to any one of claims 1 to 6.

8. A method for illumination of forward and outward area of a vehicle (10) that leans into turns, said method comprises:

casting light forward in front of the vehicle (10) by a first light source ($11L_C$); and
casting light forward and outward of the vehicle (10) on one side of the width direction of the vehicle (10) by a plurality of second light sources ($11L_L$, $11L_R$, 13La-Lc, 13Ra-Rc), wherein the plurality of second light sources ($11L_L$, $11L_R$, 13La-Lc, 13Ra-Rc) has illumination ranges positioned outward of an illumination range of the first light source ($11L_C$) and at different positions relative to the vertical direction of the vehicle (10) in the upright state of the vehicle (10),
detecting a lean angle of the vehicle (10), and
varying the brightnesses of the second light sources ($11L_L$, $11L_R$, 13La-Lc, 13Ra-Rc) according to the lean angle of the vehicle (10) based on the variable detected by the detection unit (22), wherein the second light sources ($11L_L$, $11L_R$, 13La-Lc, 13Ra-Rc) achieve predetermined brightnesses when the lean angle of the vehicle (10) is at a reference value individually set for each of the second light sources ($11L_L$, $11L_R$, 13La-Lc,13Ra-Rc), **characterized in that** the illumination ranges of the second light sources ($11L_L$, $11L_R$, 3La-Lc, 3Ra-Rc) are positioned further upward for the second light sources ($11L_L$, $11L_R$, 13La-Lc, 13Ra-Rc) having larger reference values in an upright state of the vehicle (10), and
when the lean angle of the vehicle (10) reaches a specific value greater than the reference value set for one of the second light sources ($11L_L$, $11L_R$, 13La-Lc, 13Ra-Rc), and the first light source ($11L_C$) and an upper second light source having a larger reference value than the one of the second light source are on, the one of the second light sources ($11L_L$, $11L_R$, 13La-Lc, 13Ra-Rc) becomes darker than the predetermined brightness.

**Patentansprüche**

1. Eine Scheinwerfer-Einheit für ein Fahrzeug (10), ausgebildet um sich in Kurven zu liegen mit:

einer ersten Licht-Quelle ($11L_C$), ausgebildet um Licht nach vorne vor das Fahrzeug (10) abzugeben; und eine Mehrzahl von zweiten Licht-Quellen ($11L_L$, $11L_R$, 13 La-Lc, 13 Ra-Rc), ausgebildet um Licht nach vorne und nach außen von dem Fahrzeug (10) auf eine Seite in der Breiten-Richtung des Fahrzeugs, (10) abzugeben, wobei die Mehrzahl von zweiten Licht-Quellen ($11L_L$, $11L_R$, 13La-Lc, 13 Ra-Rc) Ausleuchte-Bereiche haben, positioniert außerhalb von einem Ausleuchte-Bereich der ersten Licht-Quelle ($11L_C$) und an unterschiedlichen Positionen relativ zu der Vertikal-Richtung des Fahrzeugs (10) in dem aufrechten Zustand des Fahrzeugs (10); eine Erfassungs-Einheit (22), zum Erfassen einer Variablen gemäß einem Neigungs-Winkel des Fahrzeugs (10), eine Steuer-Einheit (20) zum Variieren der Helligkeit der zweiten Licht-Quellen ($11L_L$, $11L_R$, 13 La-Lc, 13 Ra-Rc) gemäß dem Neigungs-Winkel des Fahrzeugs (10) auf Grundlage der Variablen, erfasst durch die Erfassungs-Einheit (22), wobei die zweiten Licht-Quellen ($11L_L$, $11L_R$, 13La-Lc, 13 Ra-Rc) gesteuert sind um eine vorgegebene Helligkeit zu erreichen wenn der Neigungs-Winkel des Fahrzeugs (10) bei einem Referenzwert ist, individuell gesetzt für jede der zweiten Licht-Quellen (11 $L_L$, $11L_R$, 13 La-Lc, 13 Ra-Rc),
**dadurch gekennzeichnet dass** die Ausleuchte-Bereiche der zweiten Licht-Quellen ($11L_L$, $11L_R$, 13 La-Lc, 13 Ra-Rc) weiter oben für die zweiten Licht-Quellen ($11L_L$, $11L_R$, 13 La-Lc, 13 Ra-Rc) positioniert sind, die einen größeren Referenzwert in dem aufrechten Zustand des Fahrzeugs (10) haben, und
wenn der Neigungs-Winkel des Fahrzeugs (10) einen spezifischen Wert, größer als der Referenzwert, gesetzt für eine der zweiten Licht-Quellen ($11L_L$, $11L_R$, 13 La-Lc, 13 Ra-Rc), erreicht und die erste Licht-Quelle ($11L_C$) und eine obere zweiten Licht-Quelle, die einen größeren Referenzwert hat, als die eine der zweiten Licht-Quellen, an ist, ist die eine der zweiten Licht-Quellen ($11L_L$, $11L_R$, 13 La-Lc, 13 Ra-Rc) gesteuert um dunkler zu werden als die vorgegebene Helligkeit.

2. Eine Scheinwerfer-Einheit gemäß Anspruch 1, **dadurch gekennzeichnet dass** die Mehrzahl von zweiten Licht-Quellen eine Unter-Licht-Quelle beinhalten, konfiguriert um einen Ausleuchte-Bereich aufzuweisen, der einen Raum oberhalb einer horizontalen Linie in dem aufrechten Zustand des Fahrzeugs (10) beinhaltet, und der Ausleuchte-Bereich der Unter-Licht-Quelle (13 La-Lc, 13 Ra-Rc) ist in einem Raum unterhalb der horizontalen Linie, wenn der Neigungs-Winkel des Fahrzeugs (10) einen Referenzwert erreicht, gesetzt für die Unter-Licht-Quelle (13 La-Lc, 13 Ra-Rc).

3. Eine Scheinwerfer-Einheit gemäß Anspruch 1 oder 2, **dadurch gekennzeichnet dass** die Mehrzahl von zweiten Licht-Quellen eine Unter-Licht-Quelle (13 La-Lc, 13 Ra-Rc) beinhaltet, konfiguriert um einen Ausleuchte-Bereich aufzuweisen der einen Raum oberhalb einer horizontalen Linie in dem aufrechten Zustand des Fahrzeugs (10) beinhaltet, und der Winkel, kreiert durch die Ab-Schneidlinie und die horizontale Linie der Unter-Licht-Quelle (13 La-Lc, 13 Ra-Rc), wenn der Neigungs-Winkel des Fahrzeugs (10) einen Referenzwert erreicht, gesetzt für die Unter-Licht-Quelle (13 La-Lc, 13 Ra-Rc), ist kleiner als der Winkel, kreiert durch die Ab-Schneidlinie und die horizontale Linie der Unter-Licht-Quelle (13 La-Lc, 13 Ra-Rc) in dem aufrechten Zustand des Fahrzeugs (10).

4. Eine Scheinwerfer-Einheit gemäß irgend einem der Ansprüche 1 bis 3, **dadurch gekennzeichnet dass** die Mehrzahl von zweiten Licht Quellen eine Unter-Licht-Quelle (13 La-Lc, 13 Ra-Rc) beinhaltet, konfiguriert um einen Ausleuchte-Bereich aufzuweisen der einen Raum oberhalb einer horizontalen Linie in dem aufrechten Zustand des Fahrzeugs (10) beinhaltet, und der Winkel, kreiert durch die Ab-Schneidenlinie und die horizontale Linie der Unter-Licht-Quelle (13 La-Lc, 13 Ra-Rc), wenn der Neigungs-Winkel des Fahrzeugs (10) einen speziellen Wert erreicht, gesetzt für die Unter-Licht-Quelle (13 La-Lc, 13 Ra-Rc), ist größer als der Winkel, kreiert durch die Ab-Schneidenlinie und die horizontale Linie einer oberen Unter-Licht-Quelle (13 La-Lc, 13 Ra-Rc), die einen größeren Referenzwert hat als die Unter-Licht-Quelle (13 La-Lc, 13 Ra-Rc).

5. Eine Scheinwerfer-Einheit gemäß irgend einem der Ansprüche 1 bis 4, **dadurch gekennzeichnet dass** die erste Licht-Quelle ($11L_C$) und die zweiten Licht-Quellen ($11L_L$, $11L_R$, 13 La-Lc, 13 Ra-Rc) fixierte Lichtachsen haben, und der Ausleuchte-Bereich der ersten Licht-Quelle ($11L_C$) teilweise den Ausleuchte-Bereich der untersten zweiten Licht-Quelle ($11L_L$, $11L_R$, 13 La-Lc, 13 Ra-Rc), in dem aufrechten Zustand des Fahrzeugs (10), überlappt, und wobei die Ausleuchte-Bereiche der zweiten Licht-Quellen ($11L_L$, $11L_R$, 13 La-Lc, 13 Ra-Rc) in dem aufrechten Zustand des Fahrzeugs (10) teilweise einander überlappen.

6. Eine Scheinwerfer-Einheit gemäß irgend einem der Ansprüche 1 bis 5, **dadurch gekennzeichnet dass** die erste Licht-Quelle ($11L_C$) und einige der Mehrzahl der zweiten Licht-Quellen Abblendlicht-Licht-Quellen ($11L_L$, $11L_R$) eines Hauptscheinwerfer (11) sind die einen Ausleuchte-Bereich unterhalb einer horizontalen Linie, in einem aufrechten Zustand des Fahrzeugs (10) haben, die verbleibenden zweiten Licht-Quellen (13 La-Lc, 13 Ra-Rc) sind Unter-Licht-Quellen, konfiguriert um Ausleuchte-Bereiche zu haben, die einen Bereich oberhalb der horizontalen Linie, in dem aufrechten Zustand des Fahrzeugs (10) beinhalten, und die Abblendlicht-Licht-Quellen als die zweiten Licht-Quellen haben einen Referenzwert von 0°.

7. Ein Fahrzeug das sich in Kurven legt, wobei das Fahrzeug (10) eine Scheinwerfer-Einheit gemäß irgend einem der Ansprüche 1 bis 6 umfasst.

8. Ein Verfahren zum Ausleuchten eines vorderen und auswärtigen Bereich des Fahrzeugs das sich in Kurven legt, dieses Verfahren umfasst:

Abgeben von Licht nach vorne vor das Fahrzeug (10) durch eine erste Licht-Quelle ($11L_C$); und Abgeben von Licht nach vorne und außen von dem Fahrzeug (10) an einer Seite in der Breiten-Richtung des Fahrzeugs (10) durch eine Mehrzahl von zweiten Licht-Quellen (11 $L_L$, $11L_R$, 13 La-Lc, 13 Ra-Rc), wobei die Mehrzahl von zweiten Licht-Quellen ($11L_L$, $11L_R$, 13 La-Lc, 13 Ra-Rc) Ausleuchte-Bereiche haben, positioniert außerhalb von einem Ausleuchte-Bereich der ersten Licht-Quelle ($11L_C$) und an unterschiedlichen Positionen mit Bezug auf die vertikale Richtung des Fahrzeugs (10) in dem aufrechten Zustand des Fahrzeugs (10), Erfassen eines Neigungs-Winkel des Fahrzeugs (10), und Variieren der Helligkeit der zweiten Licht-Quellen ($11L_L$, $11L_R$, 13 La-Lc, 13 Ra-Rc) gemäß dem Neigungs-Winkel des Fahrzeugs (10) aufgrund der Variable, erfasst durch die Erfassungs-Einheit (22), wobei die die zweiten Licht-Quellen ($11L_L$, $11L_R$, 13 La-Lc, 13 Ra-Rc) eine vorgegebene Helligkeit erreichen, wenn der Neigungs-Winkel des Fahrzeugs an einem Referenzwert ist, individuell gesetzt für jede der zweiten Licht-Quellen ($11L_L$, $11L_R$, 13 La-Lc, 13 Ra-Rc), **dadurch gekennzeichnet dass** die Ausleuchte-Bereiche der zweiten Licht-Quellen ($11L_L$, $11L_R$, 13 La-Lc, 13 Ra-Rc) weiter oben für die zweiten Licht-Quellen ($11L_L$, $11L_R$, 13 La-Lc, 13 Ra-Rc) positioniert sind, die größere Referenzwerte in einem aufrechten Zustand des Fahrzeugs (10) haben, und wenn der Neigungs-Winkel des Fahrzeugs (10) einen spezifischen Wert, größer als der Referenzwert, gesetzt für eine der zweiten Licht-Quellen ($11L_L$, $11L_R$, 13 La-Lc, 13 Ra-Rc), erreicht und die erste Licht-Quelle ($11L_C$) und eine obere zweite Licht-Quelle, die einen größeren Referenzwert hat als die eine der zweiten Licht-Quelle, an ist, wird die eine der zweiten Licht-Quellen ($11L_L$, $11L_R$, 13 La-Lc, 13 Ra-Rc) dunkler als die vorgegebene Helligkeit.

## Revendications

1. Bloc optique pour un véhicule (10) adapté pour se pencher dans les virages comprenant :

   une première source de lumière ($11L_C$) adaptée pour projeter de la lumière vers l'avant du véhicule (10) ; et
   une pluralité de secondes sources de lumière ($11L_L$, $11L_R$, 13La-Lc, 13Ra-Rc) adaptées pour projeter de la lumière vers l'avant et vers l'arrière du véhicule (10) sur un côté du sens de la largeur du véhicule (10),
   la pluralité des secondes sources de lumière ($11L_L$, $11L_R$, 13La-Lc, 13Ra-Rc) ayant des plages d'éclairage positionnées vers l'extérieur d'une plage d'éclairage de la première source de lumière ($11L_C$) et à des positions différentes par rapport au sens vertical du véhicule (10) dans l'état redressé du véhicule (10) ;
   une unité de détection (22) de détection d'une variable selon un angle d'inclinaison du véhicule (10),
   une unité de commande (20) pour faire varier les clartés des secondes sources de lumière ($11L_L$, $11L_R$, 13La-Lc, 13Ra-Rc) selon l'angle d'inclinaison du véhicule (10) sur la base de la variable détectée par l'unité de détection (22), les secondes sources de lumière ($11L_L$, $11L_R$, 13La-Lc, 13Ra-Rc) étant régulées pour atteindre des clartés prédéterminées lorsque l'angle d'inclinaison du véhicule (10) se trouve à une valeur de référence individuellement paramétrée pour chacune des secondes sources de lumière ($11L_L$, $ILL_R$, 13La-Lc, 13Ra-Rc), **caractérisé en ce que** les plages d'éclairage des secondes sources de lumière ($11L_L$, $11L_R$, 13La-Lc, 13Ra-Rc) sont positionnées en outre vers le haut pour les secondes sources de lumière ($11L_L$, $11L_R$, 13La-Lc, 13Ra-Rc) ayant des valeurs de référence plus grandes dans l'état redressé du véhicule (10), et
   lorsque l'angle d'inclinaison du véhicule (10) atteint une valeur spécifique supérieure à la valeur de référence paramétrée pour l'une des secondes sources de lumière ($11L_L$, $11L_R$, 13La-Lc, 13Ra-Rc), et la première source de lumière ($11L_C$) et une seconde source de lumière supérieure ayant une valeur de référence plus grande que l'une des secondes sources de lumière sont allumées, l'une des secondes sources de lumière ($11L_L$, $11L_R$, 13La-Lc, 13Ra-Rc) est régulée pour devenir plus sombre que la clarté prédéterminée.

2. Bloc optique selon la revendication 1, **caractérisé en ce que** la pluralité des secondes sources de lumière comprend une sous-source de lumière de phare (13La-Lc, 13Ra-Rc) configurée pour avoir une plage d'éclairage qui comprend un espace situé au-dessus d'une ligne horizontale dans l'état redressé du véhicule (10), et la plage d'éclairage de la sous-source de lumière de phare (13La-Lc, 13Ra-Rc) se trouve dans un espace situé en-dessous de la ligne horizontale lorsque l'angle d'inclinaison du véhicule (10) atteint une valeur de référence paramétrée pour la sous-source de lumière de phare (13La-Lc, 13Ra-Rc).

3. Bloc optique selon la revendication 1 ou 2, **caractérisé en ce que** la pluralité des secondes sources de lumière comprend une sous-source de lumière de phare (13La-Lc, 13Ra-Rc) configurée pour avoir une plage d'éclairage qui comprend un espace situé au-dessus d'une ligne horizontale dans l'état redressé du véhicule (10), et l'angle créé par la ligne de démarcation et la ligne horizontale de la sous-source de lumière de phare (13La-Lc, 13Ra-Rc) lorsque l'angle d'inclinaison du véhicule (10) atteint une valeur de référence paramétrée pour la sous-source de lumière de phare (13La-Lc, 13Ra-Rc) est inférieur à l'angle créé par la ligne de démarcation et la ligne horizontale de la sous-source de lumière de phare (13La-Lc, 13Ra-Rc) dans l'état redressé du véhicule (10).

4. Bloc optique selon l'une quelconque des revendications 1 à 3, **caractérisé en ce que** la pluralité des secondes sources de lumière comprend une sous-source de lumière de phare (13La-Lc, 13Ra-Rc) configurée pour avoir une plage d'éclairage qui comprend un espace situé au-dessus d'une ligne horizontale dans l'état redressé du véhicule (10), et l'angle créé par la ligne de démarcation et la ligne horizontale de la sous-source de lumière de phare (13La-Lc, 13Ra-Rc) lorsque l'angle d'inclinaison du véhicule (10) atteint la valeur spécifique paramétrée pour la sous-source de lumière de phare (13La-Lc, 13Ra-Rc) est supérieur à l'angle créé par la ligne de démarcation et la ligne horizontale d'une sous-source de lumière de phare supérieure (13La-Lc, 13Ra-Rc) ayant une valeur de référence plus grande que la sous-source de lumière de phare (13La-Lc, 13Ra-Rc).

5. Bloc optique selon l'une quelconque des revendications 1 à 4, **caractérisé en ce que** la première source de lumière ($11L_C$) et les secondes sources de lumière ($11L_L$, $11L_R$, 13La-Lc, 13Ra-Rc) ont des axes d'éclairage fixes, et la plage d'éclairage de la première source de lumière ($11L_C$) chevauche partiellement la plage d'éclairage de la seconde source de lumière la plus basse ($11L_L$, $11L_R$, 13La-Lc, 13Ra-Rc) dans l'état redressé du véhicule (10), et les plages d'éclairage des secondes sources de lumière ($11L_L$, $11L_R$, 13La-Lc, 13Ra-Rc) se chevauchant partiellement l'une l'autre dans l'état redressé du véhicule (10).

6. Bloc optique selon l'une quelconque des revendications 1 à 5, **caractérisé en ce que** la première source de lumière ($11L_C$) et certaines de la pluralité des secondes sources de lumière sont des feux de croisement ($11L_L$, $11L_R$) d'un bloc optique principal (11) qui présente une plage d'éclairage située en-dessous d'une ligne horizontale dans l'état redressé du véhicule (10), les secondes sources de lumière restantes (13La-Lc, 13Ra-Rc) sont des sous-sources de lumière de phare configurées pour avoir des plages d'éclairage qui comprennent un espace situé au-dessus de la ligne horizontale dans l'état redressé du véhicule (10), et les seconds feux de croisement comme secondes sources de lumière ($11L_L$, $11L_R$, 13La-Lc, 13Ra-Rc) ayant une valeur de référence de 0°.

7. Véhicule qui s'incline dans les virages, le véhicule (10) comprenant un bloc optique selon l'une quelconque des revendications 1 à 6.

8. Procédé d'éclairage de zone avant et arrière d'un véhicule (10) qui s'incline dans les virages, ledit procédé comprenant :

la projection de lumière vers l'avant du véhicule (10) par une première source de lumière ($11L_C$) ; et la projection de lumière vers l'avant et vers l'arrière du véhicule (10) sur un côté du sens de la largeur du véhicule (10) par une pluralité de secondes sources de lumière ($11L_L$, $11L_R$, 13La-Lc, 13Ra-Rc), la pluralité des secondes sources de lumière ($11L_L$, $11L_R$, 13La-Lc, 13Ra-Rc) ayant des plages d'éclairage positionnées vers l'extérieur d'une plage d'éclairage de la première source de lumière ($11L_C$) et à des positions différentes par rapport au sens vertical du véhicule (10) dans l'état redressé du véhicule (10),
la détection d'un angle d'inclinaison du véhicule (10), et
la variation des clartés des secondes sources de lumière ($11L_L$, $11L_R$, 13La-Lc, 13Ra-Rc) selon l'angle d'inclinaison du véhicule (10) sur la base de la variable détectée par l'unité de détection (22), les secondes sources de lumière ($11L_L$, $11L_R$, 13La-Lc, 13Ra-Rc) atteignant des clartés prédéterminées lorsque l'angle d'inclinaison du véhicule (10) se trouve à une valeur de référence individuellement paramétrée pour chacune des secondes sources de lumière ($11L_L$, $11L_R$, 13La-Lc, 13Ra-Rc),
**caractérisé en ce que** les plages d'éclairage des secondes sources de lumière ($11L_L$, $11L_R$, 13La-Lc, 13Ra-Rc) sont positionnées en outre vers le haut pour les secondes sources de lumière ($11L_L$, $11L_R$, 13La-Lc, 13Ra-Rc) ayant des valeurs de référence plus grandes dans un état redressé du véhicule (10), et
lorsque l'angle d'inclinaison du véhicule (10) atteint une valeur spécifique supérieure à la valeur de référence paramétrée pour l'une des secondes sources de lumière ($11L_L$, $11L_R$, 13La-Lc, 13Ra-Rc), et la première source de lumière ($11L_C$) et une seconde source de lumière supérieure ayant une valeur de référence plus grande que l'une des secondes sources de lumière sont allumées, l'une des secondes sources de lumière ($11L_L$, $11L_R$, 13La-Lc, 13Ra-Rc) devient plus sombre que la clarté prédéterminée.

FIG.1

FIG.2

LEFT FLASHER — 14L

RIGHT FLASHER — 14R

15

15F

15B

FLASHER SWITCH

BEAM SWITCH

HIGH BEAM LIGHT SOURCE — 11H

CENTER LOW-BEAM LIGHT SOURCE — 11Lc

LEFT LOW-BEAM LIGHT SOURCE — 11LL

RIGHT LOW-BEAM LIGHT SOURCE — 11LR

11

11L

POWER SUPPLY

26

SUB HEADLIGHT LIGHT SOURCE — 13La

SUB HEADLIGHT LIGHT SOURCE — 13Lb

SUB HEADLIGHT LIGHT SOURCE — 13Lc

13L

LEAN ANGLE SENSOR

CONTROLLER

SUB HEADLIGHT LIGHT SOURCE — 13Ra

SUB HEADLIGHT LIGHT SOURCE — 13Rb

SUB HEADLIGHT LIGHT SOURCE — 13Rc

13R

ANSWERBACK MAIN BODY UNIT (COMMUNICATION UNIT, CONTROL UNIT)

VEHICLE SPEED SENSOR

22

23

20  21

30

REMOTE CONTROL KEY — 25

10

EP 2 657 076 B1

FIG.3

FIG.4B

EP 2 657 076 B1

FIG.5A

FIG.5B

FIG.5C

FIG.6

FIG.7

FIG.8

FIG.9A

FIG.9B

FIG.9C

FIG.10

## FIG.11

## FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080225535 A1
- US 20080112174 A1
- US 20050270785 A1
- JP 4806550 B